# EUROPÄISCHE PATENTANMELDUNG

(11) **EP 0 977 224 A2**
(43) Veröffentlichungstag der Anmeldung: **02.02.2000**
(21) Anmeldenummer: 99114837.0
(22) Anmeldetag: 29.07.1999
(51) Int. Cl.: H01H 11/00, H01H 37/04

(54) **Verfahren zur Herstellung eines elektrischen Schaltgeräts**

(30) Priorität: 29.07.1998 DE 19833983
(71) Anmelder: E.G.O. ELEKTRO-GERÄTEBAU GmbH, D-75038 Oberderdingen (DE)
(72) Erfinder: Reimold, Günther, 75038 Oberderdingen-Flehingen (DE); Platt, Nils, Huntington Beach, CA 92647 (US); Mannuss, Siegfried, 75447 Sternenfels (DE)
(74) Vertreter: Patentanwälte Ruff, Beier, Schöndorf und Mütschele

(57) **Zusammenfassung**

Die Erfindung schafft ein Verfahren zur Herstellung eines elektrischen Schaltgerätes (89) mit einem Schaltgerätsockel (41) samt Anschlüssen (12). Sowohl Anschlüsse als auch Verbindungen (13) zwischen den Anschlüssen sind aus einem Flachmaterial herausgearbeitet und als zusammenhängende Platine (16) in eine Form-Vorrichtung (36) eingebracht, in der einzelne Abschnitte durch vorzugsweise rechtwinkliges Umbiegen aus der Platinenebene genommen werden. Anschließend wird die zusammenhängende Platine in eine Spritzgußform (25) zur Herstellung des Schaltgerätsockels eingebracht. Teile der Platine können Formbegrenzungen bilden, während andere Teile vollständig von dem Material umschlossen werden. Nach dem Spritzgußvorgang wird wenigstens eine Verbindung zwischen den Anschlüssen getrennt.

## Beschreibung

### ANWENDUNGSGEBIET UND STAND DER TECHNIK

Die Erfindung betrifft ein Verfahren zur Herstellung eines elektrischen Schaltgeräts, insbesondere eines taktenden Leistungssteuergerätes, mit einem Schalter mit Schaltkontakt und Gegenkontakt sowie einem Schaltgerätsockel, der Anschlüsse enthält.

Derartige Schaltgeräte sind beispielsweise aus der DE 26 25 716 bekannt. Anschlüsse in Form von Metallfahnen werden üblicherweise in zu der Geometrie der Metallfahne korrespondierende Schlitze in dem Schaltgerätsockel gesteckt und durch Aufspalten von Absätzen, die im Bereich der Innenseite des Schaltgerätsockels angeordnet sind, nach Art eines Verstemmens festgelegt. Das sich ausdehnende Material der Metallfahne verpreßt sich zum Festhalten gegen das Material des Schaltgerätsockels, der bevorzugt aus Kunststoff besteht.

Als nachteilig wird bei dieser Methode angesehen, daß zum einen durch das Verstemmen der Abschnitte eine zu starke Belastung des Materials des Schaltgerätsockels auftreten kann. Darüber hinaus besteht die Gefahr, daß sich bei häufiger mechanischer Belastung der Anschlüsse diese lockern können. Bei einer Vielzahl von Anschlüssen in einem Schaltgerätsockel wird auch das vielfache Einführen von Anschlüssen in Schlitze in dem Schaltgerätsockel als nachteilig empfunden.

### AUFGABE UND LÖSUNG

Es ist Aufgabe der Erfindung, ein Verfahren zur Herstellung eines elektrischen Schaltgerätes bereitzustellen, das die Nachteile des Standes der Technik vermeidet, insbesondere eine dauerhafte Befestigung der Anschlüsse in einem Schaltgerätsockel gewährleistet sowie den Herstellungsvorgang vereinfacht.

Diese Aufgabe wird durch ein Verfahren mit den Merkmalen des Anspruchs 1 gelöst. Anschlüsse und Verbindungen zwischen den Anschlüssen bzw. zu anderen Einrichtungen können vorteilhaft aus einem Flachmaterial herausgearbeitet und in einem darauffolgenden Herstellungsabschnitt als zusammenhängende Platine mit den Verbindungen zwischen den Anschlüssen in eine Vorrichtung eingebracht werden, in der einzelne Abschnitte durch Umbiegen und/oder Abkanten aus der Ebene der Platine gebracht werden. Verbindungen können bevorzugt noch zu einem Halterahmen o.dgl. bestehen. Danach kann die Platine in einer Form, in der sämtliche Anschlüsse miteinander verbunden sind, in eine Form bzw. ein Werkzeug zur Herstellung des Schaltgerätsockels aus bei der Fertigung plastisch verformbarem Material eingebracht werden. Einige Teile der Platine, vorzugsweise Anschlüsse, können Formbegrenzungen des Werkzeuges bilden. Teile der Platine können derart verlaufen, daß sie zumindest abschnittsweise von dem Material vollständig umschlossen werden. Nach dem Herstellen des Schaltgerätsockels kann in einem weiteren Herstellungsvorgang wenigstens eine Verbindung zwischen wenigstens zwei Anschlüssen durchgetrennt werden, quasi als Vereinzelung von Abschnitten bzw. Anschlüssen der Platine nach Herstellung des Schaltgerät-sockels. Ein solches Verfahren weist den Vorteil auf, daß die Anschlüsse fest, dauerhaft und mechanisch belastbar in dem Schaltgerätsockel gehaltert sind. Ein weiterer Vorteil besteht darin, daß lediglich eine Baugruppe in Form der zusammenhängenden Platine gehandhabt werden muß anstelle von mehreren einzelnen Anschlußfahnen und/oder Verbindungen.

Die Verbindungen können bevorzugt durch Stanzen getrennt werden, wobei es möglich ist, zum Trennen auch durch das Material des Schaltgerätsockels hindurchzustanzen. Die Stanzungen können in einem räumlich sehr begrenzten Bereich stattfinden, da die Verbindungen bevorzugt relativ schmal ausgeführt sind. Eine nachteilige mechanische Schwächung des Schaltgerätsockels ist durch derartige Stanzungen nicht zu befürchten. Es ist möglich, die Verbindungen in dem Schaltgerätsockel so zu führen, daß sie ohnehin zu durchstanzende bzw. zu durchbrechende Bereiche des Schaltgerätsockels passieren. Dies können beispielsweise Durchführungen bzw. Lageröffnungen für Teile oder Funktionseinheiten des Schaltgeräts sein.

Wenigstens eine Verbindung oder Kontaktbahn der Platine bleibt vorteilhaft undurchtrennt und führt von einem Anschluß zu dem Schalter bzw. einer Kontaktmöglichkeit des Schalters. Sie kann von dem Material des Schaltgerätsockels zumindest abschnittsweise völlig umgeben sein. So kann eine räumliche Trennung von Schalter bzw. Schalteranschluß und dessen Anschlußfahne realisiert werden ohne zusätzlichen Verdrahtungsaufwand, wobei eine von dem Material umgebene Verbindung gleichzeitig isoliert wird.

Ein bevorzugtes Herstellungsverfahren für den Schaltgerätsockel ist ein Spritzgießverfahren. Es kann elektrisch und/oder thermisch isolierender Kunststoff verwendet werden, bevorzugt ein Thermoplast. In einem Spritzvorgang können eine oder mehrere Platinen gleichzeitig umspritzt werden.

Das Flachmaterial der Platine kann als Endlosband bzw. Endlosmaterial zugeführt werden, vorzugsweise zu einer Stanzeinrichtung, in der die Anschlüsse und Verbindungen durch Ausstanzen aus dem Material herausgearbeitet werden können. Nach dem Herausarbeiten der Anschlüsse und Verbindungen kann die Platine von dem Endlosmaterial abgetrennt werden. Vorzugsweise weist das Endlosmaterial zur Reduktion von Verschnitt eine Breite auf, die einer Abmessung der Platine entspricht.

Zusätzlich zu Anschlüssen, die aus einer gemeinsamen Platine herausgearbeitet wurden, können zusätzliche Anschlüsse in den Schaltgerätsockel eingebracht werden. Eine Möglichkeit ist ein Einsetzen in dafür vorgesehene, zu dem Querschnitt der vorzugsweise flachen Anschlüsse korresondierende Ausnehmungen, wobei ein Festlegen insbesondere durch Verstemmen erfolgt.

Die Randbegrenzungen der Anschlüsse können, insbesondere in dem nachher in dem Schaltgerätsockel befindlichen Bereich, unregelmäßig gestaltet bzw. mit Ausnehmungen versehen sein, beispielsweise mit einer Verzahnung. Auf diese Weise ist ein sicherer Halt der eingegossenen bzw. eingespritzten Anschlüsse in dem Schaltgerätsockel gewährleistet. Möglich sind auch Durchbrüche in dem Material, die von dem Kunststoff als Brücke gefüllt werden, um eine Art Haltezapfen für die Anschlußfahnen zu bilden.

Durch ein oben beschriebenes Herstellungsverfahren kann insbesondere ein elektrisches Schaltgerät geschaffen bzw. hergestellt werden, das einen Schaltgerätsockel aufweist, der Anschlüsse nach außen enthält und wenigstens einen Schalter trägt, welcher wenigstens einen Schaltkontakt und wenigstens ein Gegenkontakt aufweist. Die Kontakte können mit Anschlüssen verbunden sein und mindestens eine Verbindung von einem Anschluß zu dem Schalter kann zumindest abschnittsweise vollständig von dem Schaltgerätsockel umgeben sein. Bevorzugt ist diese Verbindung in den Schaltgerätsockel eingegossen.

Der Schaltgerätsockel kann eine Gehäusewandung des Schaltgeräts bilden, vorzugsweise eine Rückwand eines im wesentlichen flachen Gehäuses des Schaltgeräts. Zumindest teilweise können Seitenwände des Gehäuses an dem Schaltgerätsockel angeformt sein.

Die metallischen Anschlüsse bzw. Anschlußfahnen können als Steckkontakte bzw. Steckanschlußfahnen über eine Rückseite des Schaltgerätesockels überstehen, beispielsweise mit einer Höhe von ca. 5 mm bis 10 mm, ebenso als Lötfahnen. Ein Flachmaterial, aus dem die Anschlüsse bevorzugt gefertigt sind, kann eine Stärke zwischen 0,2 mm und 2 mm aufweisen.

Bevorzugt stehen die Anschlüsse zumindest teilweise über eine Innenseite des Schaltgerätsockels vor, wobei sie insbesondere durch den Schaltgerätsockel hindurch verlaufen. Mit einer Seite können sie vorteilhaft zumindest teilweise an Vorsprüngen an der Innenseite anliegen und durch diese abgestützt sein oder diese abstützen.

Auf der Rückseite und/oder der Innenseite können zwischen wenigstens zwei Anschlüssen Trennstege o.dgl. verlaufen, die vorzugsweise an dem Schaltgerätsockel angeformt sind bzw. mit diesem fest verbunden sind. Die Stege können in etwa die Höhe der Anschlüsse haben, wobei sie sie vorzugsweise überragen. Als vorteilhaft wird eine Dicke bzw. Stärke der Stege im Bereich zwischen 0,5 mm und 5 mm angesehen, besonders vorteilhaft ca. 1 mm.

Wenigstens drei Anschlüsse können auf der Rückseite in einer Reihe angeordnet sein, vorzugsweise sind mehrere Reihen vorhanden. Die Reihen können parallel zueinander verlaufen. Bevorzugt sind die Anschlüsse flach ausgebildet und mindestens zwei Anschlüsse weisen entlang einer Linie. Mehrere Linien können durch jeweils mindestens zwei Anschlüsse gebildet sein, wobei die Linien vorzugsweise parallel verlaufen. Die Anschlüsse können in Gruppen angeordnet sein, die aus mindestens zwei miteinander verbundenen Anschlüssen bestehen können. Dies ermöglicht ein Durchschleifen an den Anschlüssen. Eine Verbindung der Anschlüsse miteinander verläuft zumindest teilweise innerhalb des Schaltgerätesockels um die Anzahl der freiliegenden, elektrisch leitenden Teile zu reduzieren.

Ein zentraler Bereich des Schaltgerätsockels ist bevorzugt frei von Anschlüssen oder Verbindungen, wobei er beispielsweise als Aufnahme für eine Verstelleinrichtung des Schaltgerätes ausgebildet sein kann. Die Aufnahme kann zumindest teilweise rund, insbesondere mit mehreren konzentrischen Abstufungen als Ausnehmung in dem Schaltgerätsockel, ausgebildet sein. Bevorzugt ist die Aufnahme an der Innenseite des Schaltgerätsockels angeordnet, wobei der Schaltgerätsockel topfförmig über die Rückseite überstehen kann um ausreichend Raum für mehrere Abstufungen, eventuell weitere Einrichtungen, zur Verfügung zu haben.

Wenigstens ein Anschluß kann als Kontakt über die Innenseite des Schaltgerätesockels ragen, wobei er vorzugsweise einen Kontaktkopf trägt, der aus speziellem Kontaktmaterial bestehen kann und angelötet oder angeschweißt ist oder beispielsweise durch Prägung als Wölbung an dem Anschluß erzeugt wird. Vorzugsweise weisen wenigstens zwei Anschlüsse jeweils einen Kontaktkopf in derselben Höhe über der Innenseite auf. Wenigstens zwei Kontakte weisen vorteilhaft für eine gemeinsame Schaltrichtung in dieselbe Richtung.

Der Schalter, der von dem Schaltgerätsockel getragen wird, ist vorteilhaft ein Schnappschalter, der insbesondere eine bistabile Schnappfeder mit einem Schaltkontaktkopf aufweist. Eine Auslösung kann durch ein thermomechanisches Schaltorgan, vorzugsweise ein Thermobimetall mit Heizung, auslösbar sein. Über eine Verstelleinrichtung, beispielsweise eine Steuerachse mit einer Handhabe, kann eine Beeinflussung des Schnappschalters erfolgen. Eine Möglichkeit der Beeinflussung ist eine Änderung der Position des Schnappschalters im Verhältnis zu dem auslösenden Schaltorgan, wodurch das Schaltverhalten des Schalters bzw. eine Schaltintervalldauer verändert werden kann. Durch das Verstellorgan können vorteilhaft weitere Schalteinrichtungen direkt ausgelöst werden, beispielsweise einfache Kontaktschalter.

Vorteilhaft weist die Innenseite des Schaltgerätsockels eine Lagerung oder Aufnahme für eine weitere Schalteinrichtung auf, die bevorzugt als Längsführung mit wenigstens einer Längsnut ausgebildet ist. Diese zweite Schalteinrichtung ist bevorzugt ein durch die Verstelleinrichtung gegen eine Federeinrichtung betätigbarer Schiebeschalter. Er kann aus einem in der Längsführung verschiebbaren Formkörper bestehen, der wenigstens einen mit einem Kontaktkopf versehenen Schaltarm trägt. Ein Gegenkontakt kann von aus dem Schaltgerätsockel ragenden Anschlüssen gebildet sein. Bevorzugt trägt der Formkörper zwei Schaltarme bzw. einen durchgängigen Schaltarm mit Kontaktköpfen an den Enden, die durch Anlegen an jeweils einem Gegenkontakt diese elektrisch miteinander verbinden. Auf diese Weise können sowohl größere elektrische Leistungen geschaltet werden, beispielsweise Zusatzheizungen bei einem Schaltgerät als Leistungsschalter für einen Elektroherd, oder Signale, die lediglich eine Zustandsänderung an eine Steuerung geben. Wenn in Verschieberichtung mehrere Schaltarme hintereinander angeordnet sind, können gleichzeitig oder hintereinander mehrere Schaltvorgänge ausgelöst werden. Eine Auslösung des Schiebeschalters kann, ähnlich wie eine Beeinflussung des Schnappschalters, über wenigstens eine auf der Steuerachse sitzende Nockenwalze ausgelöst werden. Sowohl der Schnappschalter als auch der Schiebeschalter können mit Vorsprüngen o. dgl. an jeweils einer Nockenwalze anliegen.

Eine Begrenzung der Längsführung kann vorzugsweise von einem über die Innenseite ragenden Abschnitt der Platine, aus der die Anschlüsse gearbeitet sind, bestehen. Sie kann ein Widerlager und/oder eine Befestigung für eine Federeinrichtung des Schiebeschalters sein, wobei insbesondere eine umgebogene Lasche an einem Ende zur Befestigung der Federeinrichtung vorgesehen ist.

An einem über die Innenseite des Schaltgerätesockels vorragenden Anschluß kann eine dritte Schalteinrichtung angeordnet sein, insbesondere als daran angeschlagener bzw. angeschweißter metallischer Federarm mit einem Kontaktkopf an einem Ende. Der Gegenkontaktkopf ist vorzugsweise an einem anderen über den Schaltgerätsockel vorragenden Anschluß angebracht.

In Normalstellung können die beiden Kontaktköpfe entweder beabstandet sein oder den Kontakt schließen, und durch die Verstelleinrichtung auslösbar sein. Eine Auslösung kann je nach Aufbau dieses Schalters ein Öffnen oder Schließen des Kontakts sein. Je nach Ausbildung der verschiedenen Nockenwalzen der Verstelleinrichtung können Schaltvorgänge des Schiebeschalters und der dritten Schalteinrichtung gleichzeitig oder aber in verschiedenen Stellungen der Verstelleinrichtung erfolgen.

Es kann insbesondere ein elektrisches Schaltgerät mit einem Schaltgerätsockel und Anschlüssen geschaffen werden, das einen Schnappschalter mit wenigstens einer Schnappfeder aufweist, welche wenigstens einen Schaltkontaktkopf trägt. Der Schnappschalter ist durch ein thermomechanisches Schaltorgan auslösbar, wobei zu seiner thermischen Beeinflussung eine Heizeinrichtung mit einem metallischen Träger für wenigstens einen Heizwiderstand vorgesehen ist. Das thermomechanische Schaltorgan ist bevorzugt ein Thermobimetall, wobei besonders bevorzugt die Schicht mit dem größeren Ausdehnungskoeffizienten zu dem Träger bzw. dem Heizwiderstand hin weist.

Bei einer Ausführung der Erfindung besteht der Träger aus Flachmaterial, wobei er insbesondere eine Platte mit einer Stärke zwischen 0,1 mm und 4 mm ist, beispielsweise ca. 1 mm. Er kann eine rechteckige Form haben.

Vorteilhaft weist der Träger eine elektrisch isolierende Isolationsschicht zwischen wenigstens einer Oberfläche und dem wenigstens einen Heizwiderstand auf. Sie kann unlösbar auf eine Oberseite des Trägers aufgebracht sein und diese im wesentlichen bedecken. Eine Isolationsschicht kann beispielsweise durch ein Dickschichtverfahren aufgetragen werden, bevorzugt ist sie glasartig oder aus Glas oder Keramik. Alternativ sind isolierende Folien o. dgl. möglich, zB. aus hochtemperaturfestem Kunststoff. Eine in einem Dickschichtverfahren aufgebrachte Isolationsschicht aus Glas o. dgl. kann es ermöglichen, einen Heizwiderstand flächig und direkt auf sie aufzubringen, beispielsweise einen Dickschichtheizwiderstand. Er kann mit wenigstens einem Kontakt bzw. einem metallischen Kontaktfeld, das ebenfalls in einem Dickschichtverfahren aufgebracht sein kann, verbunden sein. Ein Kontaktfeld kann zumindest teilweise direkt auf die Isolationsschicht aufgebracht sein und in einem Bereich den Heizwiderstand zur elektrischen Kontaktierung überlappen bzw. sich mit diesem überdecken. Ein anderes, vorzugsweise zweites, Kontaktfeld kann direkt auf dem Trägermaterial aufliegen und den Träger kontaktieren. Dazu bedeckt die Isolationsschicht vorzugsweise eine Oberfläche des Trägers nur teilweise, so daß das Kontaktfeld in dem freien Abschnitt direkt auf dem Träger aufliegen kann. Auf diese Weise ist der Träger über das Kontaktfeld mit dem Heizwiderstand bzw. einem Ende davon verbunden. Möglich ist des weiteren ein drittes Kontaktfeld, das beispielsweise eine Art Mittelabgriff des Heizwiderstandes ermöglicht. Es liegt bevorzugt auf der Isolationsschicht auf und ragt seitlich unter dem Heizwiderstand vor.

Die Oberfläche des Trägers kann zumindest teilweise aus einem für Dickschichtverfahren geeigneten Stahl, einem sogenannten Dickschichtstahl, bestehen. Näheres hierzu ist in der EP-A 885 579 beschrieben. Einerseits kann der Träger ganz aus einem Dickschichtstahl bestehen. Andererseits kann der Träger aus mehreren unlösbar miteinander verbundenen Schichten, insbesondere aus wenigstens einer Dickschichtstahlschicht als Außenseite für die Heizeinrichtung und wenigstens einer kupferhaltigen Schicht, bestehen. Bevorzugt ist ein Schichtaufbau des Trägers symmetrisch zu seiner Mittelebene und weist besonders bevorzugt eine Kernschicht aus Kupfer und Außenschichten aus Dickschichtstahl auf. Dies hat den Vorteil, daß ein Bimetalleffekt des Trägers vermieden wird sowie der Kupferkern im wesentlichen eingeschlossen ist. Die Mittelschicht aus Kupfer sollte dicker sein als die Außenschichten, insbesondere zwei- bis zwanzigmal so dick, bevorzugt ca. viermal so dick. Ein solches Material ist z.B. durch Plattieren aus einzelnen Blechen o.dgl. großflächig herstellbar, wobei die einzelnen Trägerplatten anschließend lediglich ausgeschnitten und abgetrennt werden müssen.

Der Träger kann an dem Schaltorgan gehaltert sein, beispielsweise durch Kontaktschweißen. Das Schaltorgan ist bevorzugt metallisch und elektrisch leitfähig, wobei es einen elektrischen Anschluß für die Heizeinrichtung bilden kann. Der Träger und das Schaltorgan können sich im Bereich ihrer Verbindung flächig berühren, wozu beide zumindest teilweise flach und eben sind. Bei einer Ausführung kann das Schaltorgan ab etwa dem mittleren Drittel des Trägers oder des Heizwiderstandes davon beabstandet sein, wobei es vorzugsweise mit geringem und etwa gleichem Abstand dazu verläuft und den Träger um ein gutes Stück in Längsrichtung überragt.

Das Schaltorgan ist bevorzugt langgestreckt und liegt mit einem freien Ende an der Schnappfeder, insbesondere an einem freien Ende der Schnappfeder, an. Das Ende des Schaltorgans kann hakenförmig o.dgl. abgebogen sein, wobei es vorteilhaft in dieser hakenförmigen Abbiegung eine Ausnehmung in Längsrichtung des Schaltorgans aufweist.

Eine Möglichkeit einer Justiereinrichtung zur Veränderung des Abstandes zwischen Schaltorgan und Schnappfeder kann im Bereich des freien Endes des Schaltorgans vorgesehen sein, beispielsweise in der hakenförmigen Abbiegung. Eine Justierung kann durch eine Drehbewegung erfolgen. Hierzu ist vorteilhaft ein Stift vorgesehen mit einer umlaufenden und stetig zunehmenden Durchmessererweiterung, der in der Abbiegung gelagert ist und mit der Durchmessererweiterung an dem freien Ende der Schnappfeder anliegt. Durch Drehen ist eine Änderung des Abstands möglich. Wenn die Drehachse und/oder die Stiftachse senkrecht zu der Bewegungsrichtung des Schaltorgans verlaufen, hat eine bei der Justierung in Achsenrichtung auftretende Kraft keine Verstellung der Schnappfeder zur Folge und eine präzise Justierung ist möglich. Zur Justierung weist der Stift vorzugsweise an einem Abschnitt Werkzeugangriffsflächen auf. Die Durchmessererweiterung läuft bevorzugt in der länglichen Ausnehmung. Wenn die Abbiegung für den Stift die sich stärker ausdehnende Schicht des Schaltorgans bzw. Thermobimetalls radial außen trägt, schließt sich die Abbiegung bei Erwärmung und klemmt den Justierstift fest, so daß eine Drehung desselben vermieden werden kann.

Alternativ kann eine Justiereinrichtung an dem Träger angreifen, insbesondere an der von dem Schaltorgan abgewandten Seite und/oder an der Heizeinrichtung. Durch sie kann die Position des Trägers und/oder der Schnappfeder relativ zu einer Lagerung der Schnappfeder, mit welcher der Träger über das an der Schnappfeder anliegende Schaltorgan verbunden ist, bestimmt werden. In weiterer Ausgestaltung kann die Justiereinrichtung zumindest teiweise elektrisch leitend sein, bevorzugt metallisch, wobei sie vorteilhaft einen elektrischen Anschluß für den Heizwiderstand bildet. Eine Möglichkeit ist eine in dem Schaltgerätsockel gelagerte Metallschraube, die in Bewegungsrichtung des Schaltorgans weist und an einem Kontakt bzw. Kontaktfeld des Heizwiderstandes anliegt. Das Lager der Schraube kann mit einem Anschluß für das Schaltgerät verbunden sein, insbesondere einstückig. Zur verbesserten Isolation kann diese Verbindung zumindest teilweise vollständig innerhalb des Schaltgerätsockels laufen, beispielsweise beim Herstellvorgang darin eingespritzt werden. So ist es möglich, eine Anschlußfahne o. dgl. an einer anderen Stelle als den einen Anschluß für die Heizeinrichtung vorzusehen.

Das Schaltorgan kann federnd an dem Schaltgerätsockel befestigt sein, bevorzugt an einem über die Innenseite des Schaltgerätsockels reichenden Abschnitt eines Anschlusses für das Schaltgerät. Bevorzugt liegt es unter elastischer Spannung an einer Verstelleinrichtung für seine Position an. Mit dem Träger für den Heizwiderstand kann es an einer Kontakteinrichtung für die Heizung anliegen.

Die Schnappfeder ist vorzugsweise über ein elastisches Trageblech, welches mit dem freien Ende der Schnappfeder verbunden ist, an dem Schaltgerätsockel befestigt. Mit elastischer Spannung wird sie dabei in Richtung auf das Schaltorgan zu gedrückt, wozu das Trageblech in etwa U-förmig abgebogen sein kann und sowohl das Schaltorgan trägt als auch beide Vorrichtungen aufeinander zu drückt.

An dem Trageblech kann ein Schleifer angebracht sein, der mit einem Vorsprung an einer Verstelleinrichtung elastisch anliegt und auf diese Weise die Stellung der Schnappfeder relativ zu der Verstelleinrichtung festlegt. Er kann an der von der Schnappfeder abgewandten Seite, vorzugsweise in der Nähe der Befestigung des Trageblechs an dem Schaltgerätsockel, befestigt sein.

Die Verstelleinrichtung weist vorzugsweise eine Steuerachse mit wenigstens einer Nockenwalze auf, wobei der Radius der Nockenwalze zumindest abschnittsweise zunimmt. Durch Drehen der Steuerachse samt Nockenwalze kann die Stellung der Schnappfeder verändert werden, beispielsweise der Abstand des freien Endes zu dem Schaltorgan verändert werden.

Möglich ist auf diese Weise eine elektrische Kontaktierung der Heizeinrichtung einerseits über die Justiereinrichtung und andererseits über den Träger und das Schaltorgan, welches in der Regel ohnehin unter Spannung steht.

Die Schnappfeder ist vorzugsweise als bistabile Dreipunktblattfeder ausgeführt, insbesondere einstückig. Sie weist bevorzugt zwei haarnadelförmige Schenkel auf, die an wenigstens einem Ende, vorzugsweise beiden, miteinander verbunden sind, wobei ein verbundenes Ende an einer Verlängerung den Schaltkontaktkopf trägt. Zwischen den Schenkeln kann eine von einem Ende, insbesondere dem mit dem Schaltkontaktkopf, abgehende Federzunge verlaufen und an einem Widerlager abgestützt sein. Die Federzunge steht üblicherweise gegenüber den Schenkeln unter Vorspannung und speichert einen Teil der Schaltenergie für den Umschaltvorgang.

Der Schleifer kann als Thermobimetall ausgebildet sein und vorzugsweise das Widerlager für die Federzunge der Schnappfeder bilden. Es ist möglich, ihn als Kompensationsbimetall mit derselben Biegungsrichtung wie das Schaltorgan auszuführen. So ist ein Ausgleich einer durch äußere Umstände hervorgerufenen Änderung der Umgebungstemperatur und somit einer Formänderung des Schaltbimetalls möglich, um in einem weiten Umgebungstemperaturbereich ein exaktes Schaltverhalten zu gewährleisten.

Ein Schaltgerät, das insbesondere nach einem oben beschriebenen Herstellungsvorgang hergestellt worden ist, kann einen Schaltgerätsockel, wenigstens einen Schalter, eine an dem Schaltgerätsockel gelagerte Verstelleinrichtung zur Beeinflussung des Schaltverhaltens des Schalters und eine Handhabe samt Betätigungsflächen für einen Benutzer aufweisen. Bevorzuggt ist eine gegen einen elastischen Widerstand lösbare Blockiereinrichtung in der Verbindung zwischen Handhabe bzw. Betätigungsflächen und Lagerung der Verstelleinrichtung in dem Schaltgerätsockel vorgesehen, wobei die Blockiereinrichtung im ungelösten bzw. blockierenden Zustand einen Formschluß zwischen Handhabe und Schaltgerätsockel zur Blockierung einer Verstellbewegung bildet. Eine solche Blockiereinrichtung kann ein ungewolltes bzw. versehentliches Verstellen oder Anschalten einer von dem Schaltgerät betätigbaren Einrichtung vermeiden. Das Vorssehen einer elastischen Widerstandseinrichtung kann es ermöglichen, daß sich die Blockierung in bestimmten Stellungen oder jeder Stellung selbsttätig aktiviert, um die inhärente Sicherheit zu erhöhen. Derartige Blockiereinrichtungen sind beispielsweise als Kindersicherungen im Einsatz, lösen ihre Aufgabe aber nur unvollständig.

Nach einer Ausgestaltungsmöglichkeit der Erfindung kann die Verstelleinrichtung eine Steuerachse und die Verstellbewegung eine Drehung um diese Achse sein, wobei die Achse vorteilhaft wenigstens eine Nockenwalze o. dgl. trägt bzw. zumindest drehfest mit ihr verbunden ist. Die Nockenwalze kann einen bereichsweise veränderlichen bzw. zunehmenden Radius aufweisen, der unterschiedlich stark ansteigen oder abnehmen kann. Die Steuerachse ist vorzugsweise mit einem Ende bzw. Endbereich in dem Schaltgerätsockel gelagert und weist an dem anderen Ende die Handhabe auf.

In weiterer Ausgestaltung kann die Handhabe, vorzugsweise auch die Steuerachse, in Längsrichtung der Steuerachse zumindest teilweise gegenüber dem Schaltgerät und/oder gegenüber der Nockenwalze beweglich sein. Dies ermöglicht es, die Blockiereinrichtung in Längsrichtung der Steuerachse lösbar und/oder aktivierbar zu gestalten. Eine Lösung der Blockierung durch Drücken und/oder Drehen der Handhabe wird als besonders vorteilhaft angesehen.

Im Bereich des Schaltgerätsockels kann zwischen Steuerachse und Schaltgerätsockel eine Federung vorgesehen sein, insbesondere als die Steuerachse umgebende Feder mit konstantem Durchmesser. Die Feder kann an einem zumindest teilweise umlaufenden Vorsprung der Steuerachse und einem Boden einer Ausnehmung in dem Schaltgerätsockel anliegen. Die Feder ist vorteilhaft aus Metall, beispielsweise eine Spiralfeder mit wenigen Windungen.

Gemäß einer Ausführungsmöglichkeit der Erfindung ist die Blockiereinrichtung zwischen Steuerachse und Schaltgerätsockel gebildet und im Bereich des Schaltgerätsockeis angeordnet. Zumindest teilweise kann sie die Lagerung einschließen. Es ist möglich, die Steuerachse im Bereich ihrer Lagerung unrund auszuführen, beispielsweise mit einem vorzugsweise abgeflachten Vorsprung oder Abschnitt, der sich über den Querschnitt der vorzugsweise runden Steuerachse erhebt. Passend dazu weist die Lagerung eine zu dem unrunden Abschnitt korrespondierende Ausnehmung in einem Durchbruch in dem Schaltgerätsockel auf. Eine Durchmessererweiterung der Steuerachse als unrunder Vorsprung kann das 1,5-fach bis 4-fache des Radius der Steuerachse aufweisen, vorzugsweise das ca. 2,5-fache. Die Durchmessererweiterung kann sich über eine Länge zwischen 1 mm und 10 mm, insbesondere ca. 3 mm, an der Steuerachse erstrecken, um ausreichende mechanische Festigkeit zu gewähren.

Eine alternative Möglichkeit besteht darin, die Blockiereinrichtung an einer Abdeckung zwischen Handhabe und Schaltgerätsockel angreifen zu lassen, wozu teilweise die Handhabe eingeschlossen werden kann. Die Abdeckung ist vorzugsweise als Frontblende eines Elektrogerätes o. dgl. ausgebildet, an deren Rückseite das Schaltgerät befestigt ist, wobei die Steuerachse durch eine Öffnung in der Blende verläuft und die Handhabe trägt. Der Vorteil einer Blockiereinrichtung, die die Handhabe umfaßt, liegt darin, daß an der Handhabe angreifende Betätigungskräfte direkt von der Blockiereinrichtung aufgefangen werden können ohne über weitere Einrichtungen wie die Steuerachse weitergeleitet werden zu müssen.

Die Blockiereinrichtung kann wenigstens eine Ausnehmung und wenigstens einen korrespondierenden und beim Blockieren darin eingreifenden Vorsprung aufweisen, die durch eine Bewegung der Handhabe in Längsrichtung der Steuerachse in bzw. aus dem Eingriff bringbar sind. Eine solche Bewegung ist vorteilhaft eine Bewegung der Handhabe auf die Abdeckung zu. Wenigstens eine Ausnehmung ist in der Abdeckung und wenigstens ein Vorsprung ist an einem durch die Öffnung der Abdeckung ragenden radial innen gelegenen Abschnitt der Handhabe ausgebildet. Wird die Handhabe gegen die Abdeckung gedrückt, fährt der Vorsprung an der Handhabe aus der Ausnehmung in der Abdeckung aus und die Handhabe ist frei drehbar.

Bevorzugt weist die Handhabe ein an der Steuerachse befestigtes Knebelinnenteil und ein daran angebrachtes Knebelaußenteil mit Betätigungsflächen auf. Das Knebelaußenteil kann als Ring den Innenteil im wesentlichen umschließen bzw. umgeben und gegenüber diesem drehbar und axial gegen einen elastischen Widerstand verschiebbar sein. Zwischen den beiden Teilen können korrespondierende Rastmittel angeordnet sein, die im Normalzustand, der vorzugsweise durch den Widerstand automatisch hergestellt wird, voneinander frei sein bzw. freikommen können. Durch axiales Verschieben ist es dann möglich, sie in Eingriff zu bringen und in Umfangsrichtung formschlüssig zu verbinden. Danach ist eine Übertragung von Kräften in Umfangsrichtung, also Verstellkräften, von dem Knebelaußenteil bzw. den Betätigungsflächen an den Innenteil bzw. die Steuerachse möglich.

Die Rastmittel umfassen bevorzugt wenigstens eine Ausnehmung und wenigstens einen dazu korrespondierenden Vorsprung, die insbesondere im Bereich des Außenumfangs des Knebelinnenteils ausgebildet sind zum besseren Auffangen von Drehmomenten. Vorteilhaft ist wenigstens eine Ausnehmung an dem Knebelinnenteil und wenigstens ein passender Vorsprung an dem Knebelaußenteil ausgebildet. Bei jeweils genau einer Ausnehmung und einem Vorsprung kann eine Verrastung nur in einer Position stattfinden. Eine Verrastung in mehreren Positionen ist durch das Vorsehen mehrerer Ausnehmungen bzw. Vorsprünge möglich.

In weiterer Ausgestaltung der Erfindung kann eine Zusatzfederung als elastischer Widerstand zwischen Knebelinnenteil und Knebelaußenteil vorgesehen sein, insbesondere im Bereich des Innenumfangs des Knebelaußenteils. Eine kurze Spiralfeder, die in einem schmalen kreiszylindrischen Zwischenraum zwischen Knebelinnenteil und Knebelaußenteil verläuft, bietet sich hierfür an. Ihre Federkonstante bzw. ihr Widerstand kann größer gewählt sein als die der Federung des Knebelinnenteils gegenüber dem Schaltgerätsockel, wodurch bei einem Eindrücken der Handhabe bzw. der Betätigungsflächen über den Knebelaußenteil zuerst der Knebelinnenteil gegenüber dem Schaltgerätsockel bewegt werden kann, bevorzugt zur Lösung der Blockiereinrichtung, und anschließend der stärkere Widerstand der Zusatzfedereinrichtunq überwunden wird, um Knebelinnenund Knebelaußenteil zur Betätigung der Steuerachse miteinander zu verbinden. Auf diese Weise ist es möglich, eine nur in einer Stellung selbsttätig einrastende Blockiereinrichtung zu lösen um das Schaltgerät zu betätigen, wobei sich Knebelinnen- und Knebelaußenteil wieder selbsttätig in der Weise voneinander trennen, daß der Knebelaußenteil gegenüber dem Innenteil frei drehbar ist. Zur Verstellung des Schaltgeräts muß erst wieder der Eingriff hergestellt werden.

Der Knebelinnenteil kann axial verschiebbar auf der Steuerachse gelagert sein, wobei diese zumindest teilweise seitlich abgeflacht ist. Darauf kann der Innenteil mit einem korrespondierenden zentralen Sackloch, in dem sich eine Federeinrichtung befindet, aufgesetzt sein. Die Steuerachse ist dabei gegenüber dem Schaltgerätsockel axial unbewegbar. Durch das axiale Verschieben des Knebelinnenteils gegenüber einer Abdeckung des Sockels oder Frontblende kann ein Lösen und/oder Aktivieren der Blockierung erfolgen. Alternativ ist die Steuerachse axial verschiebbar in dem Schaltgerätesockel gelagert.

Ein Schaltgerät mit einem Schaltgerätsockel und einer Verstelleinrichtung für wenigstens einen Schalterteil mit einem Formkörper kann insbesondere nach einem oben beschriebenen Herstellungsvorgang hergestellt werden. Dabei ist an dem Formkörper wenigstens ein Kontaktträger mit mindestens einem Schaltkontaktkopf gehaltert und der Schalterteil liegt an nichtmetallischen elastischen Federmitteln an. Ein derartiger Schalterteil kann zusätzlich zu weiteren Schalteinrichtungen an einem Schaltgerät vorgesehen sein. Der Vorteil von nichtmetallischen Federmitteln liegt unter anderem darin, daß die Gefahr von Kurzschlüssen oder ungewollten Kontaktierungen, die bei Spiralfedern auftreten können, vermieden wird.

Die Federmittel bestehen vorteilhaft aus Kunststoffmaterial, das vorzugsweise silikonhaltig ist, besonders bevorzugt vollständig aus Silikon besteht. Bevorzugt ist das Material der Federmittel aufgeschäumt, vorzugsweise um den Faktor 1,2 bis 10, beispielsweise etwa um den Faktor 2. Durch ein Aufschäumen des Kunststoffmaterials wird eine hinreichend genau definierbare Elastizität der Federmittel erreicht. Zusätzlich lassen sich Material und Gewicht sparen. Alternativ können die Federmittel mit Hohlräumen und/oder Aussparungen versehen sein, die eine Elastizität begünstigen.

Bei einer Ausgestaltung der Erfindung sind die Federmittel als voluminöser Federkörper ausgebildet, dessen Länge im entspannten Zustand in Verstellrichtung des Schalterteils weisend geringer ist als seine Höhe oder Breite bzw. der Durchmesser. Der Federkörper kann zumindest in entspannten Zustand in Verstellrichtung des Schalterteils zylindrisch sein, vorteilhaft ist er quaderförmig.

Ein voluminöser Federkörper weist im Gegensatz zu einer länglichen Spiralfeder o. dgl. den Vorteil auf, daß er keine aufwendige Lagerung oder Führung benötigt. Während eine zusammengedrückte Spiralfeder in der Regel seitlich auszuweichen sucht, ist bei einem voluminösen Federkörper durch die Ausdehnung quer zur Kraftrichtung sowie die Auflageflächen ein sicherer Halt gegeben. Elastische Körper sind zudem gegen Scherkräfte unempfindlicher, da diese ebenso der Federwirkung des Materials unterliegen.

Die Federmittel sind bevorzugt an dem Schaltgerätsockel abgestützt, insbesondere daran befestigt. Beispielsweise bietet sich ein aus dem Schaltgerätsockel ragendes Widerlager an, das eine an dem Schaltgerätsockel gehalterte oder darin eingebettete Metallplatte sein kann. Eine Befestigung kann durch Umbiegen einer Lasche oder eines Vorsprungs der Metallplatte an oder in die Federmittel erfolgen, alternativ ist eine Verklebung möglich.

Als günstig wird weiters eine Befestigung der Federmittel an dem Schalterteil vorgenommen, vorzugsweise an dem Formkörper. Da der Formkörper vorteilhaft aus Kunststoff besteht, werden die Federmittel bevorzugt daran festgeklebt. Eine weitere Möglichkeit ist das Anformen eines Dorns o. dgl. an dem Formkörper, auf den der Federkörper halternd gesteckt werden kann.

Im entspannten Zustand kann der Federkörper eine Länge im Bereich zwischen 3 mm und 20 mm aufweisen, insbesondere ca. 6 mm. Eine Querschnittsfläche in Verstellrichtung des Schalterteils kann zwischen 10 mm² und 200 mm², vorzugsweise bei ca. 50 mm², liegen.

Die Struktur des Formkörpers kann in Verstellrichtung in unterschiedliche Abschnitte unterteilt sein, um in Abhängigkeit vom Federweg bzw. der Zusammendrückung des Federkörpers ein unterschiedliches Federverhalten bzw. unterschiedliche Federkräfte einzustellen. Eine Möglichkeit dies zu erreichen können Ausnehmungen bzw. Hohlräume in dem Formkörper sein, wodurch sich ein abschnittsweise unterschiedlicher Querschnitt ergibt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen dargestellt und werden im folgenden näher erläutert. In den Zeichnungen zeigen:
- Fig. 1: eine aus einem Flachmaterial herausgearbeitete Platine mit Anschlüssen, die abschnittsweise bereits umgebogen sind,
- Fig. 2: eine Schrägansicht der Platine aus Fig. 1,
- Fig. 3: eine Seitenansicht der Platine aus Fig. 1,
- Fig. 4: einen Querschnitt durch eine Platine zwischen zwei Spritzguß-Werkzeughälften,
- Fig. 5: einen schematischen Fertigungsablauf gemäß der Erfindung zur Herstellung eines Schaltgerätsockels mit Anschlüssen aus Flachbandmaterial,
- Fig. 6: eine Schrägansicht der Innenseite eines erfindungsgemäßen Schaltgerätsockels,
- Fig. 7: eine Schrägansicht der Rückseite des Schaltgerätsockels aus Fig. 6,
- Fig. 8: eine Draufsicht auf einen metallischen Träger mit Dickschichtheizwiderstand und Kontaktfeldern,
- Fig. 9: eine Seitenansicht eines Schnappschalters mit einen Träger aus Fig. 8,
- Fig. 10: eine Schrägansicht einer Variante des Schnappschalters aus Fig. 9 mit Justiereinrichtung an Ende des Thermobimetalls,
- Fig. 11: einen Querschnitt durch eine Anordnung eines elektrischen Schaitgerätes hinter einer Frontblende mit einer lösbaren Blockiereinrichtung zwischen einem zweiteiligen Knebel und der Frontblende,
- Fig. 12: einen Schnitt durch die Blockiereinrichtung aus Fig. 11,
- Fig. 13: eine Variante einer Blockiereinrichtung, die teilweise von einer speziell geformten Öffnung in Boden des Schaltgerätsockels gebildet wird,
- Fig. 14: eine Steuerachse für das Schaltgerät mit verschiedenen Verstell- bzw. Nockenwalzen, welche an einem Ende korrespondierend zu der Öffnung aus Fig. 13 ausgebildet ist,
- Fig. 15: einen Schalterteil mit angesetztem Schaumstoffblock als Federung,
- Fig. 16: eine Draufsicht auf einen Schaltgerätsockel entsprechend Fig. 6 mit eingesetztem Schiebeschalter samt Schaumstoffblock entsprechend Fig. 15 und
- Fig. 17: eine Schrägansicht der Vorderseite eines fertigen vormontierten Schaltgeräts, das die Anordnung von Befestigungslöchern an dem Schaltgerätdeckel zeigt.

### DETAILLIERTE BESCHREIBUNG DER AUSFÜHRUNGSBEISPIELE

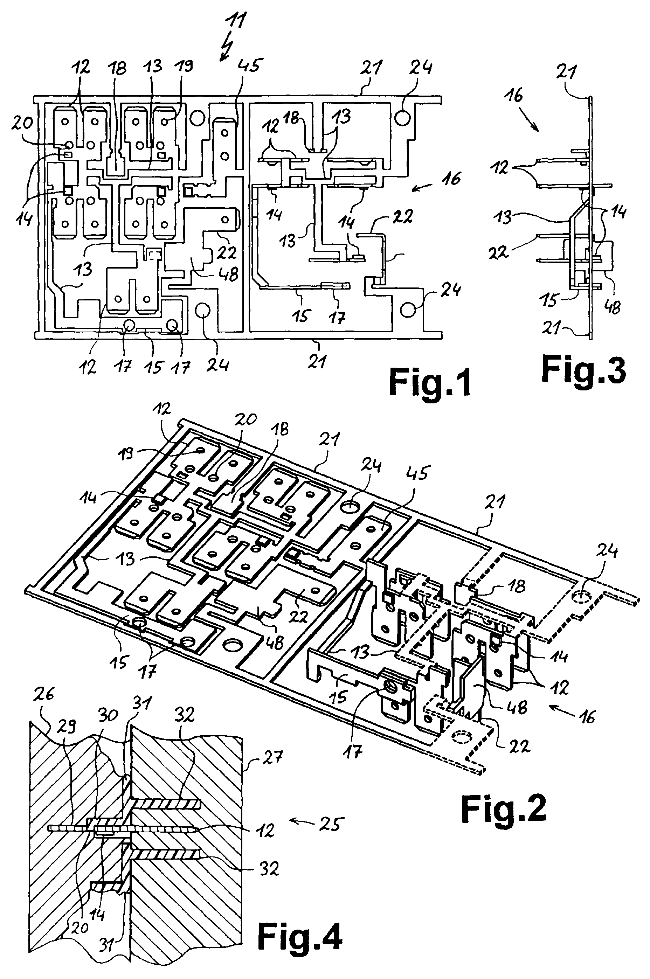

Fig. 1 zeigt einen Abschnitt eines Flachmaterialbandes 11, aus dem Anschlüsse in Form von Steckanschlußfahnen 12 samt Verbindungen zueinander herausgearbeitet sind. Das Herausarbeiten kann beispielsweise durch Stanzen erfolgen, möglich ist ebenso ein Schneiden mit Laserstrahl oder bei dünnen Materialien sogar mit Hochdruck-Wasserstrahlen. Die Mehrzahl der Steckanschlußfahnen 12 ist paarweise nebeneinander angeordnet und miteinander verbunden, wobei zwischen Fahnen bzw. Paaren von Fahnen Verbindungsstege 13 verlaufen. Teilweise tragen die Anschlüsse Kontaktköpfe 14. Im unteren Teil verläuft ein Aufnahmesteg 15, der zwei Bohrungen 17 zur Aufnahme einer Justierschraube aufweist. Der linke Abschnitt des Flachmaterialbandes 11 zeigt ein Stadium nach dem Herausarbeiten der Fahnen 12 sowie Verbindungsstege 13. Der rechte Abschnitt zeigt eine Platine 16, die durch entsprechendes Umbiegen der Steckanschlußfahnen 12 sowie der Verbindungsstege 13 in die Zeichenebene hinein hergestellt wird. Der Aufnahmesteg 15 ist aufgestellt und sein Ende derart umgebogen, daß die beiden Bohrungen 17 durchgängig hintereinander liegen. Möglich ist die Ausbildung mehrerer Platinen aus einem Flachmaterial, die zusammenhängen können.

Neben den Kontaktköpfen 14 sind an den Steckanschlußfahnen 12 bereits Rastöffnungen 19 sowie Fülllöcher 20 angebracht, an denen die aufschiebbaren Steckschuhe einrasten bzw. welche das Kunststoffmaterial für verbesserten Halt füllt.

Ebenso ragt eine metallische Befestigungslasche 18 von oben zwischen die Anschlußfahnen 12. An dieser kann ein weiter unten beschriebener Schaumstoffblock als Federung für Schalterteile befestigt werden.

Des weiteren sind Transportlöcher 24, eine Einzelfahne 22 mit einer Metallplatte 48 und ein Zusatzanschluß 45 vorgesehen.

Die Fig. 2 verdeutlicht in der Schrägansicht des Flachmaterials 11 aus Fig. 1 die Anordnung der umgebogenen bzw. aufgestellten Steckanschlußfahnen 12 und Verbindungsstege 13 sowie des Aufnahmestegs 15 und der Befestigungslasche 18 der Platine 16. Die gestrichelt dargestellten Teile sind für die spätere Verschaltung im Schaltgerätsockel nicht erforderlich bzw. störend und werden zumindest teilweise entfernt. Lediglich der Verbindungssteg 13, der von der einen Gruppe von Anschlußfahnen 12 zu dem Aufnahmesteg 15 führt, bleibt erhalten. Vor allem der mittlere Verbindungssteg 13 bleibt zwar während des Spritzvorgangs erhalten, wird aber später durchtrennt. Die in Fig. 2 hintere Verbindung der Platine 16 zu dem äußeren Rahmen 21 kann schon in dem in Fig. 2 dargestellten Verfahrensschritt bis an die Anschlußfahnen 12 hin durchtrennt werden, ohne den Zusammenhalt der Platine 16 zu beeinträchtigen.

Lediglich ein Zusatzanschluß 45 mit einem Kontaktkopf 14 ist bei den dargestellten Beispielen nicht mit der Platine 16 verbunden. Er wird auch aus dem Flachmaterialband 11 herausgearbeitet und kann beim Spritzvorgang oder später in den Schaltgerätesockel eingearbeitet bzw. eingesetzt werden.

Ein Vorteil liegt darin, daß die gesamte Platine 16 in Zusammenwirkung mit dem äußeren Rahmen 21 durch die Verbindungsstege 13 zusammengehalten wird, und so als eine Baueinheit dem Spritzvorgang zugeführt werden kann. Im äußeren Rahmen 21 sind an Vorsprüngen die Transportlöcher 24 vorgesehen, durch die das Flachmaterialband 11 in einer automatischen Fertigung sicher und positioniergenau erfaßt und transportiert werden kann.

Die Fig. 3 verdeutlicht, daß die Steckanschlußfahnen 12 und 22 sowohl in Reihen als auch parallel und mit einer gemeinsamen Höhe aus der Platine 16 heraus ausgebildet sind. Es ist zu erkennen, daß der Verbindungssteg 13, der zu dem Aufnahmesteg 15 führt, zum Teil aus der Ebene des äußeren Rahmens 21 herausgenommen ist. Der Zweck dieser speziellen Anordnung wird untenstehend erläutert.

Die Fig. 4 zeigt im Schnitt einen Teil der Platine 16 in einem Spritzgußwerkzeug 25, das aus einer oberen Werkzeughälfte 26 und einer unteren Werkzeughälfte 27 besteht. Stellvertretend für die Platine 16 ist eine Steckanschlußfahne 12 mit einem Kontaktkopf 14 sowie einem sich daran anschließenden Überstand 29 dargestellt. An den Kontaktkopf 14 anschließend weist das Flachmaterial ein Fülloch 20 auf, das mit Kunststoffmaterial eines an die Steckanschlußfahne 12 angegossenen Stützabschnitts 30 gefüllt ist. Im Bereich vor dem Kontaktkopf 14 verläuft die obere Werkzeughälfte 26 derart, daß er frei zugänglich bleibt.

Von dem Schaltgerätsockel sind ein Teil des Sockelbodens 31 sowie zwei von dessen Unterseite abstehende Trennstege 32 dargestellt. Die Trennstege verlaufen parallel zu den Steckanschlußfahnen 12 und trennen diese voneinander bzw. nach außen ab. Ihre genaue Ausbildung wird weiter unten dargestellt und erläutert.

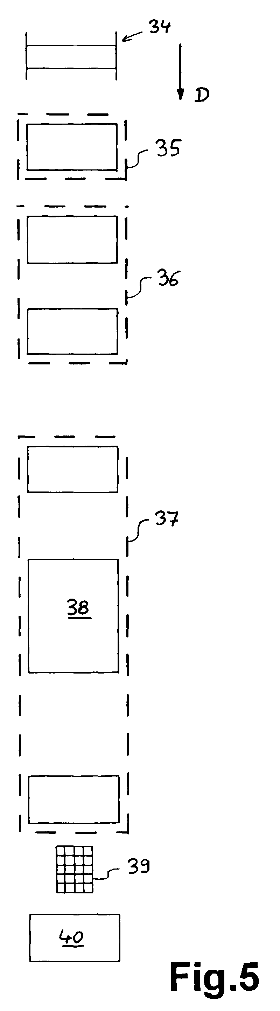

Die Fig. 5 zeigt schematisch ein Beispiel für den Verfahrensablauf zum Herstellen der Platinen 16 aus Flachmaterialband sowie das Umspritzen derselben. Die Durchlaufrichtung D verläuft in Fig. 5 von oben nach unten.

Zu Beginn wird Flachmaterial, am besten in Bandform mit passender Breite, beispielsweise auf eine Trommel 34 magaziniert und davon abgerollt. Auf das noch durchgängige Band werden durch Kontaktschweißen an einer Kontaktschweißstation 35 die Kontaktköpfe 14 jeweils an der richtigen Stelle beidseitig angebracht. Dies kann an der Schweißstation 35 oder an einer anderen Station erfolgen. Ein Teil der Kontakte kann auch durch Prägen hergestellt werden.

Als nächstes wird aus dem mit Kontakten versehenen Flachmaterialband 11 in einer Bearbeitungsstation 36 zuerst das Flachmaterialband entsprechend der Fig. 1 linker Abschnitt durch Stanzen herausgearbeitet. Anschließend an das Herausarbeiten werden in der Bearbeitungsstation 36 die Gewindelöcher in den Bohrungen 17 ausgebildet, beispielsweise durch Gewindeschneiden.

Das immer noch zusammenhängende Flachmaterialband 11 wird von der Bearbeitungsstation 36 zu der drei Arbeitsschritte umfassenden Finish-Station 37 geführt. Zuerst werden die Steckanschlußfahnen 12 sowie der Verbindungssteg 13 zu dem Aufnahmesteg 15 sowie dieser selber entsprechend Fig. 1 bis 3 ab- bzw. umgebogen. Danach wird die Platine 16, entweder noch mit dem äußeren Rahmen 21 verbunden oder schon davon abgetrennt, bevorzugt in sich zusammenhängend, in einer Umspritzanlage 38 in ein Spritzgußwerkzeug 25 gemäß Fig. 4 eingebracht und dementsprechend zumindest teilweise mit Kunststoff umspritzt. Als letzter Schritt in der Finish-Station 37 erfolgt das noch nötige Trennen der Platine 16, und zwar zum einen das Kappen der unerwünschten Verbindungsstege 13 innerhalb der Steckanschlußfahnen durch Durchstanzen durch den gespritzten Gerätesockelboden 31. Des weiteren werden evtl. die Verbindungen zu dem äußeren Rahmen 21, die aus dem Sockelboden herausstehen, durchtrennt. Nach den Arbeitsschritten in der Finishstation 37 ist der Schaltgerätsockel fertig und kann, beispielsweise in Kisten 39, weiteren Verarbeitungsstationen wie dem Montageautomat 40 zugeführt werden. Mehrere Flachmaterialbänder können parallel die gleichen Stationen durchlaufen.

In der Fig. 5 werden durch die Strichlierung der Stationen 35, 36 und 37 zusammenstehende Maschinen bzw. Anlagen gekennzeichnet. Dies hat jedoch keinerlei Auswirkung auf das Verfahrensprinzip. Ebenso sind lauter einzelne Maschinen für jeden Arbeitsschritt möglich, andere Kombinationen oder im wesentlichen eine einzige Anlage. Auch die Reihenfolge der Bearbeitungsschritte, vor allem vor der Finish-Station 37, kann variiert werden.

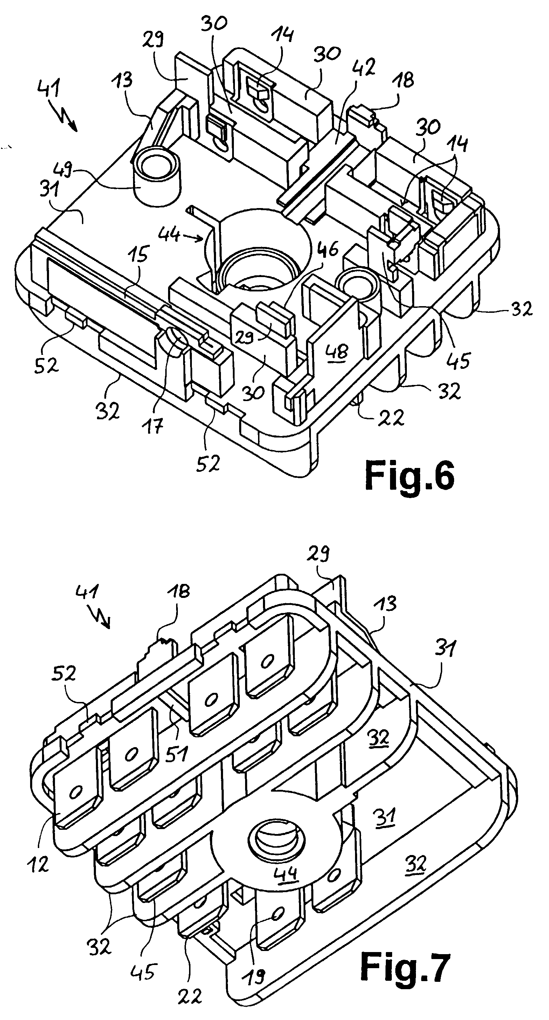

Die Fig. 6 zeigt einen beispielsweise nach einem erfindungsgemäßen Herstellungsverfahren hergestellten Schaltgerätsockel 41. Es ist zu sehen, daß auf einem im wesentlichen flachen Sockelboden 31 Aufbauten wie beispielsweise die Stützabschnitte 30 aufgesetzt bzw. angeformt sind. Die Überstände 29 der Anschlüsse stehen noch über die Stützabschnitte 30 über, während die oberen Abschnitte der Steckanschlußfahnen 12 samt der Kontaktköpfe 14 an den Stützabschnitten liegen. Zu erkennen sind vier in den Seitenbereichen angeordnete Kontaktköpfe 14, zwischen denen eine Längsführung 42 für einen weiter unten beschriebenen Schiebeschalter angeformt ist. An ihrem Ende am Rand des Schaltgerätsockels 41 ist die Befestigungslasche 18 vorgesehen.

In etwa in der Mitte des Schaltgerätsockels 41 ist eine im wesentlichen runde Aufnahme 44 für eine Steuerachse des Schaltgeräts ausgebildet. Ihre genaue Ausbildung wird untenstehend beschrieben.

Auf der in Fig. 6 rechten Seite des Schaltgerätsockels 41 ist ein Zusatzanschluß 45 vorgesehen, der ein gutes Stück über den Sockelboden 31 übersteht und an einem zweifach rechtwinklig abgebogenen Abschnitt einen Kontaktkopf 14 trägt. An diesen Kontaktkopf 14 kann ein nicht dargestellter, an dem Überstand 29 an der gegenüberliegenden Seite angebrachter Schaltarm mit einem Schaltkontakt anliegen und durch Betätigung durch die Steuerachse geöffnet oder geschlossen werden. Dabei verläuft der Schaltarm ein gutes Stück oberhalb der vier unteren Kontaktköpfe 14, so daß eine Betätigung in getrennten Ebenen erfolgen kann.

Der Zusatzanschluß 45, der in dem dargestellten Ausführungsbeispiel nicht in einer zusammenhängenden Platine 16 mit den anderen Anschlüssen in das Spritzgußwerkzeug 25 eingebracht wurde, kann entweder separat in das Werkzeug gebracht oder aber nachträglich in dem Sockel befestigt worden sein, beispielsweise durch Eindrücken in einen vorgeformten Ausschnitt.

Nahe an der Aufnahme 44 ist an einem Anschluß der Gegenkontaktkopf 46 für den Geräteschalter vorgesehen. Auch dieser Anschluß ist an einem Stützabschnitt 30 des Sockels 41 abgestützt. Seitlich daneben im Bereich des Randes des Sockels ist eine abstehende Halteplatte 48 aus Flachmaterial vorgesehen, an der der Geräteschalter befestigt werden kann.

Am gegenüberliegenden Ende der Längsführung 42 ist der Aufnahmesteg 15 zu erkennen, der an seinen beiden Längsseiten im wesentlichen von Kunststoff abgedeckt ist. Die mit Gewinde versehenen Bohrungen 17 sind dabei freigehalten. Am linken hinteren Rand des Sockels 41 sieht man einen Teil des Verbindungssteges 13, der von dem Aufnahmesteg 15 zu dem Überstand 29 und damit an Anschlüsse führt. Dieser Verbindungssteg 13 verläuft aus Isolationsgründen größtenteils innerhalb des Sockelbodens 31 und wurde als einziger Verbindungssteg nicht durchtrennt.

Links und rechts der Aufnahme 44 sind auf den Sockelboden Schraubaufnahmen 49 gesetzt bzw. angespritzt, in die entweder Schrauben zur Befestigung eines Gehäuseoberteils des Schaltgeräts oder zur Befestigung des Schaltgeräts an beispielsweise einer Frontblende eines Elektrogerätes eingreifen können. Von der Unterseite des Sockelbodens 31 gehen Trennstege 32 ab, die in Fig. 7 näher dargestellt sind.

Die Fig. 7 zeigt den Schaltgerätsockel 41 aus Fig. 6 in Schrägansicht von unten. Aus dem Sockelboden 31 stehen die sämtlich parallel ausgerichteten Steckanschlußfahnen 12 vor. In der Mitte des Sockelbodens ist die sich topfförmig über dessen Rückseite erstreckende Aufnahme 44 dargestellt.

Die Steckanschlußfahnen 12 sind in zwei Viererreihen angeordnet, wobei jeweils zwei hintereinander liegende Steckanschlußfahnen als Paare miteinander verbunden sind, dann kommt der Zusatzanschluß 45, der als Einzelanschluß 22, der mit der Halteplatte 48 verbunden ist sowie ein Paar von hintereinander angeordneten Anschlußfahnen, die einen den Gegenkontakt 46 tragenden und über die Innenseite ragenden Überstand 29 aufweisen. Die zwei einzelnen Steckanschlußfahnen sind mit jeweils den äußersten Fahnen an einer Seite der beiden Viererreihen in einer Reihe angeordnet. Auf diese Weise erhält man die in Fig. 7 deutlich zu erkennende klare und prägnante Anordnung der Steckanschlußfahnen mit jeweils gleicher Ausrichtung. Es ist noch ausreichend Fläche in dem Sockel 41 vorhanden, um weitere Steckanschlüsse o.dgl. vorzusehen.

Zwischen den beiden Viererreihen sowie zwischen dem Zusatzanschluß 45 und den restlichen drei Anschlußfahnen verlaufen parallel zu den Fahnen die Trennstege 32 über die ganze Breite des Sockels 41. Der mittlere Trennsteg verläuft an der Seite der topfförmigen Aufnahme 44 entlang, während der rechte Trennsteg zu beiden Seiten von der Aufnahme abgeht. Sie sind durchgängig an den Sockelboden 31 angespritzt. Zweck dieser Trennstege ist zum einen, das Kontaktieren von Steckanschlußfahnen, die durch die Stege getrennt sind, mittels Kurzschlüssen o.dgl. weitgehend zu vermeiden. Zu diesem Zweck haben die Stege mindestens die Höhe der Anschlußfahnen bzw. überragen diese. Zum anderen wird durch die Trennstege die Kriechstrecke zwischen parallelen Steckanschlußfahnen erheblich vergrößert und somit die Isolierung des Schaltgeräts verbessert. Ebenso ist es zu diesem Zweck möglich, zwischen Anschlußfahnen oder Paaren einer Reihe ähnliche Stege anzuformen, wie beispielsweise den Flachsteg 51.

Die Trennstege 32 können genau in der Mitte zwischen den Steckanschlußfahnen 12 verlaufen. Ebenso können sie etwas versetzt sein, um das Eingreifen ebensolcher Stege, die an dem Anschlußstecker zu demselben Zweck vorgesehen sein können, zu ermöglichen.

Die Ausbildung der Steckanschlußfahnen an den Kontaktköpfen 14 in Paaren hat den Zweck, daß dadurch Weiterverschaltungen erheblich vereinfacht sind. Somit muß an die nicht dargestellten Klemmschuhe des Anschlußsteckers jeweils nur ein Kabel angeschlossen werden. Auf diese Weise läßt sich der Aufwand auch für den Anschlußstecker reduzieren.

An zwei Seiten des Sockelbodens 31, nämlich denen mit der Befestigungslasche 18 und den Gewindebohrungen 17, sind am Rand jeweils zwei Rastvorsprünge 52 angeformt. Daran können entsprechende Rastlaschen des Gehäuseoberteils angreifen, um den Sockel 41 mit einem Oberteil werkzeuglos zu verbinden.

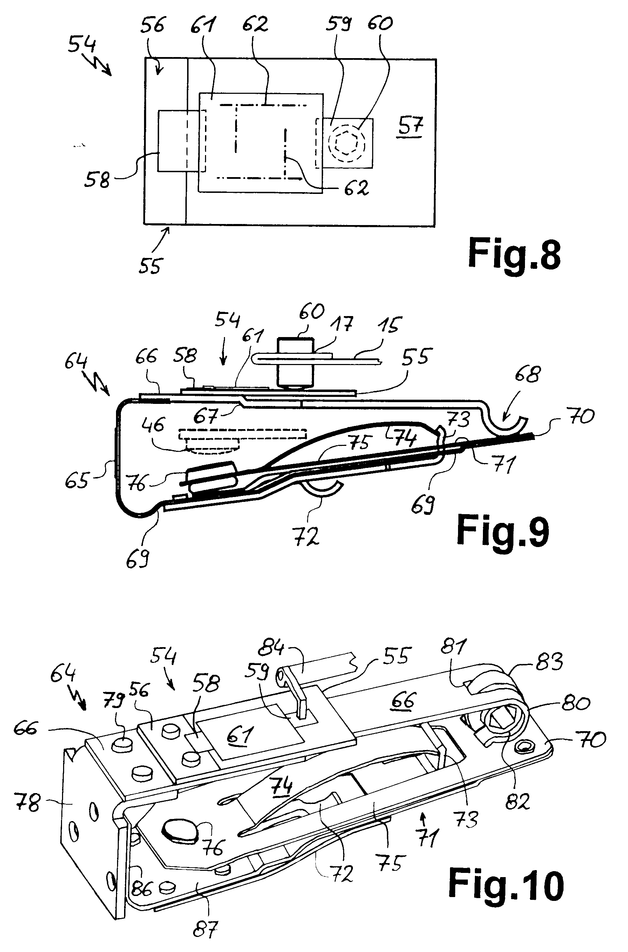

In der Fig. 8 ist eine Heizeinrichtung 54 gemäß einem Aspekt der Erfindung in Draufsicht dargestellt. Sie besteht aus einem metallischen Träger in Form einer rechteckigen Trägerplatte 55. Wie zuvor beschrieben, kann die Platte ganz aus einem für Dickschichtverfahren geeigneten Stahl bestehen oder einen Sandwichaufbau mit einer Kernschicht aus Kupfer aufweisen. Wichtig ist, daß sie zumindest eine, vorteilhaft zwei, Stahloberflächen 56 aufweist. Auf diese wird eine Isolierschicht 57 aufgebracht, wobei ein Streifen der Stahloberfläche 56 (am linken Ende der Platte) nicht bedeckt ist. Auf die beispielsweise aus Glas in einem Dickschichtverfahren hergestellte Isolierschicht 57 wird ein Anschlußkontaktfeld 58 aufgetragen, das großflächig den freien Streifen der Stahloberfläche 56 überlappt und etwa zur Hälfte auf der Isolierschicht liegt. In einem gewissen Abstand dazu befindet sich auch in dem rechten Abschnitt der Isolierschicht 57 ein Abgriffkontaktfeld 59. Beide Kontaktfelder 58 und 59 sind rechteckig, jedoch in unterschiedlicher Größe ausgeführt. Sie bestehen vorteilhaft größtenteils aus Metall und können in einem Dickschichtverfahren auf die Isolierschicht 57 bzw. die Stahloberfläche 56 aufgebracht und eingebrannt sein.

In einem dritten Arbeitsvorgang wird auf die Isolierschicht 57 eine den Randbereich der Kontaktfelder 58 und 59 überdeckende Schicht aus Widerstandsmaterial als flächiger Heizwiderstand 61 aufgebracht und eingebrannt. Die Überlappung zu den Kontaktfeldern sollte so groß sein, daß eine ausreichende und sichere Kontaktierung gewährleistet ist.

Zur präzisen Abstimmung des Heizwiderstandes 61 auf einen gewünschten bzw. vorgegebenen Widerstandswert können beispielsweise mit einem Laser strichpunktiert dargestellte Trennlinien 62 in den Heizwiderstand 61 geschnitten werden. Dies erfolgt bevorzugt in einer automatischen Abgleichanlage, in der während des Laserschneidens durch Messung an den beiden Kontaktfeldern 58 und 59 der Widerstandswert des Heizwiderstandes 61 permanent gemessen wird.

In einem letzten Arbeitsschritt wird zumindest auf die Oberfläche des Heizwiderstandes 61 eine nicht dargestellte Passivierungsschicht aufgebracht. Diese schützt das Widerstandsmaterial vor äußeren Einflüssen und verhindert beispielsweise das Zusetzen der Trennlinien 62 mit Verunreinigungen. Die Passivierungsschicht, die bevorzugt zumindest teilweise aus Glas besteht, kann bis auf das Abgriffkontaktfeld 59 theoretisch die gesamte Seite der Heizeinrichtung 54 bedecken. Die Unterseite der Platte 55 sollte zumindest im Bereich des freien Streifens frei bleiben.

Im Betrieb erfolgt die Kontaktierung des Heizwiderstandes 61 einerseits über die Trägerplatte 55 und das Anschlußkontaktfeld 58. Andererseits liegt eine weitere Kontaktierung an dem Abgriffkontaktfeld 59 an, beispielsweise eine punktiert dargestellte, in die Zeichenebene hinein verlaufende Innensechskantschraube 60. Einzelheiten hierzu sind aus Fig. 9 bzw. Fig. 10 ersichtlich.

Die Heizeinrichtungen 54 können entweder großflächig aus einem entsprechenden Flachmaterial durch das Aufbringen der entsprechenden Schichten in vielfacher Anzahl auf große Flächenbereiche und abschließendes Vereinzeln in einzelne Heizer hergestellt werden. Alternativ werden zuerst die Träger 55 auf entsprechende Größe gebracht und darauf der Schichtaufbau aufgebracht. Der Vorteil der ersten Methode liegt in der verbesserten Handhabung großer Metallplatten sowie rationeller Bearbeitungsmethoden.

Die Fig. 9 zeigt in Seitenansicht einen Schnappschalter 64 als Geräteschalter. An einem U-förmigen Trageblech 65 ist an einem oberen kurzen Schenkel als Schaltorgan ein Thermobimetallstreifen 66 befestigt, beispielsweise durch Kontaktschweißen oder Vernieten. Der Bimetallstreifen 66 weist in einem gewissen Abstand von dieser Verbindung einen Doppelknick 67 auf, um daran anschließend in gleicher Richtung in der Fig. 9 nach rechts weiterzulaufen. Der Streifen endet in einem nach unten und rechts abgebogenen Endhaken 68.

Zwischen der Verbindung des Bimetallstreifens 66 mit dem Trageblech 65 und dem Doppelknick 67 ist an seiner oberen Seite eine Heizeinrichtung 54, bevorzugt entsprechend Fig. 8, befestigt, vorteilhaft durch Kontaktschweißen. Deren Heizwiderstand 61 liegt dabei in etwa mittig über dem Doppelknick 67. Damit kann ein Teil der Heizung die Heizleistung durch Kontaktwärme von der Trägerplatte 55 direkt an das Thermobimetall in dessen Wurzelbereich übertragen. Der andere Teil der Heizleistung wird durch Strahlungswärme bzw. Konvektion von der Heizung bzw. dem Träger 55 über den Luftspalt zu dem Thermobimetall 66 im Bereich nahe des Doppelknicks 67 übertragen. Eine Beheizung vor allem des Wurzelbereichs des Thermobimetallstreifens 66 nahe seiner Befestigung an dem Trageblech 65 bewirkt eine kontrollierbare und gleichmäßige Erwärmung des Bimetalls. Daraus wiederum resultiert eine besser kontrollierbare Verformung des Streifens 66 bzw. Positionsänderung des Endes 68.

An die Heizeinrichtung 54 bzw. an dem nicht dargestellten Abgriffkontaktfeld 59 liegt eine Justierschraube 60 an, die als Innensechskantschraube ausgeführt sein kann. Sie ist in dem Aufnahmesteg 15 bzw. in den Gewindebohrungen 17 gelagert. Die Justierschraube 60 dient einerseites als zweite Kontaktierung an den Heizwiderstand 61, wie bereits oben erläutert, und führt über den Aufnahmesteg 15 und einen nicht dargestellten Verbindungssteg 13 (siehe Fig. 1 bis 3, 6 und 7) zu einem Steckanschluß.

Als weitere Aufgabe dient die Justierschraube 60 zur genauen Justierung der Stellung des Thermobimetallstreifens 66 in einem ausgewählten Zustand durch Kraftübertragung mittels des Trägers 55. Eine Justiereinrichtung dieser Art weist neben der Funktion des Kontaktierens der Heizung ohne zusätzliche Bauteile den großen Vorteil auf, daß die Lagerung des Justierelements, nämlich der Aufnahmesteg 15, wie in Fig. 6 dargestellt und beschrieben, fest und in seiner Position unveränderlich an dem Schaltgerätsockel 41 angebracht ist. Somit kann durch Anlegen eines Werkzeugs an die Justierschraube 60 und daraus resultierende Kräfte an sich ohne eine Drehbewegung der Schraube keine Positionsänderung des Bimetallstreifes 66, die zu Fehlern führen könnte, auftreten. Die Trägerplatte 55 weist vorteilhaft eine ausreichende Materialstärke auf, daß sie nicht von der Federkraft des Trageblechs 65 einerseits und der Anlage an der Schraube 60 andererseits gegen den Bimetallstreifen 66 gedrückt wird.

Der andere, längere Schenkel 69 des Trageblechs 65 ist langgezogen ausgeführt und in der Fig. 9 rechts mit dem Ende 70 der Schnappfeder 71 verbunden, beispielsweise durch Nieten oder Schweißen. An der Unterseite des unteren Schenkels 69 ist ein weiteres Element angebracht, das einen Schleifer 72 zur Anlage an einer Verstelleinrichtung für den Schnappschalter 64 aufweist. Dieses Element kann als Kompensationsbimetall ausgeführt sein, mit der gleichen Schichtanordnung wie der Streifen 66. Dadurch ist ein Ausgleich von äußeren Temperaturänderungen möglich. Des weiteren ist ein Widerlager 73 daran vorgesehen, an dem sich ein Federbügel 74 der Schnappfeder 71 abstützt. Zu beiden Seiten des Federbügels 74 verlaufen Federschenkel 75, die an dem anderen Ende der Schnappfeder 71 mit dem Federbügel verbunden sind und einen Schaltkontaktkopf 76 tragen. Die Schnappfeder 71 ist somit als Dreipunktblattfederelement ausgebildet.

Zwischen dem Schaltkontaktkopf 76 und dem Wurzelbereich des Bimetalistreifens 66 ist im Schaltgerätsockel 41 an einem Anschlußabschnitt der Gegenkontaktkopf 46 angebracht. Der Anschlußabschnitt ist mit einer nicht dargestellten Steckanschlußfahne 12 in dem Schaltgerätsockel 41 verbunden. Diese Teile sind gestrichelt dargestellt, da sie nicht zu der Baueinheit des Schalters 64 gehören.

Das aus zwei Schichten bestehende Thermobimetall 66 weist die Schicht mit dem geringeren Ausdehnungskoeffizienten auf der Seite zu der Schnappfeder 71 auf. Bei einer Erwärmung durch die Heizeinrichtung 54 krümmt sich das Thermobimetall 66 somit in Richtung auf die Schnappfeder 71 zu, in Fig. 9 nach unten, und betätigt diese durch Druck auf ihr freies Ende 70.

Bis auf die Justiereinrichtung mit der Schraube 60 und den Gegenkontaktkopf 46 bildet der Schnappschalter 64 eine Baueinheit. Mit dem die beiden Schenkel verbindenden Abschnitt des Trageblechs 65 wird der Schnappschalter 64 an einem Schaltgerätsockel 41 befestigt.

Fig. 10 zeigt in Schrägansicht eine geringfügige Abwandlung eines als Geräteschalter fungierenden Schnappschalters 64 gemäß der Erfindung. An dem abgebogenen Schenkel einer L-förmigen Grundplatte 78 ist ähnlich wie in Fig. 9 ein Thermobimetallstreifen 66 durch Nietköpfe 79 angebracht. Der Thermobimetallstreifen 66 ist länglich ausgebildet und weist an seinem freien Ende einen nach innen gebogenen Aufnahmeabschnitt 80 auf. Dieser ist mit einem mittig angebrachten Aufnahmeschlitz 81 versehen, der bis zum Ende des Streifens 66 verläuft. In diesem Schlitz ist als Justierelement ein Justierstift 82 gelagert, der sich über die Breite des Streifens 66 erstreckt und in seinem Mittelbereich eine flanschförmige Durchmessererweiterung 83 trägt. Diese Durchmessererweiterung beträgt teilweise wesentlich mehr als die Stärke des Streifens 66 und bildet an ihrem Außenumfang eine Kurve mit bevorzugt stetig zunehmendem Radius. Mit dem Außenumfang der Durchmessererweiterung 83 liegt der Justierstift 82 und somit der Bimetallstreifen 66 an dem freien Ende 70 der Schnappfeder 71 an. Je nach Stellung des Justierstifts 82 ist durch den sich ändernden Radius der Abstand zwischen Streifen 66 und dem Schnappfederende 70 veränderbar. Dies ist eine vorteilhafte Ausbildung einer Justiervorrichtung für den Schnappschalter 64 gemäß einem Aspekt der vorliegenden Erfindung.

Ähnlich wie in Fig. 9 trägt der Thermobimetallstreifen 66 im Bereich seiner Befestigung an der Grundplatte 78 eine Heizeinrichtung 54 in Form eines metallischen Trägers samt Dickschichtwiderstandsheizung 61 gemäß Fig. 8. Eine Kontaktfeder 84 liegt an dem Abgriffkontaktfeld 59 und dient neben der Kontaktierung des Heizwiderstandes 61 über das Anschlußkontaktfeld 58 und den Träger 55 an die Grundplatte 78 als zweite Kontaktierung.

Anders als in Fig. 9 ist an der L-förmigen Grundplatte 78 ein abgewinkeltes Ende 86 eines Trageblechs 87 durch Vernietung befestigt. Ansonsten ist das Trageblech 87 gemäß dem unteren Schenkel 69 in Fig. 9 ausgebildet, ebenso der Schnappschalter 64. Deswegen wird auf den Aufbau der Schnappfeder 71 samt Schleifer 72 und Schaltkontaktkopf 76 an dieser Stelle nicht weiter eingegangen.

Der Vorteil dieser Justiervorrichtung besteht unter anderem darin, daß die Angriffsrichtung des Werkzeuges zur Verstellung des Justierstiftes 82 senkrecht zu der Wirkrichtung der Justierung liegt. Dadurch können Verfälschungen bei der Justierung infolge der Krafteinwirkung des Werkzeuges auf den Justierstift 82 vermieden werden. Der Vorteil der dargestellten Ausbildung des Aufnahmeabschnittes 80 mit einer Krümmung nach innen liegt darin, daß sich bei einer Erwärmung des Thermobimetallstreifens 66 der Abschnitt verengt und damit den Justierstift 82 besonders fest und lagesicher umfaßt. Zur Vereinfachung des Einzetzens des Stiftes 82 in den Aufnahmeabschnitt 80 können die gegabelten Enden des Streifens wie dargestellt etwas aufgebogen sein.

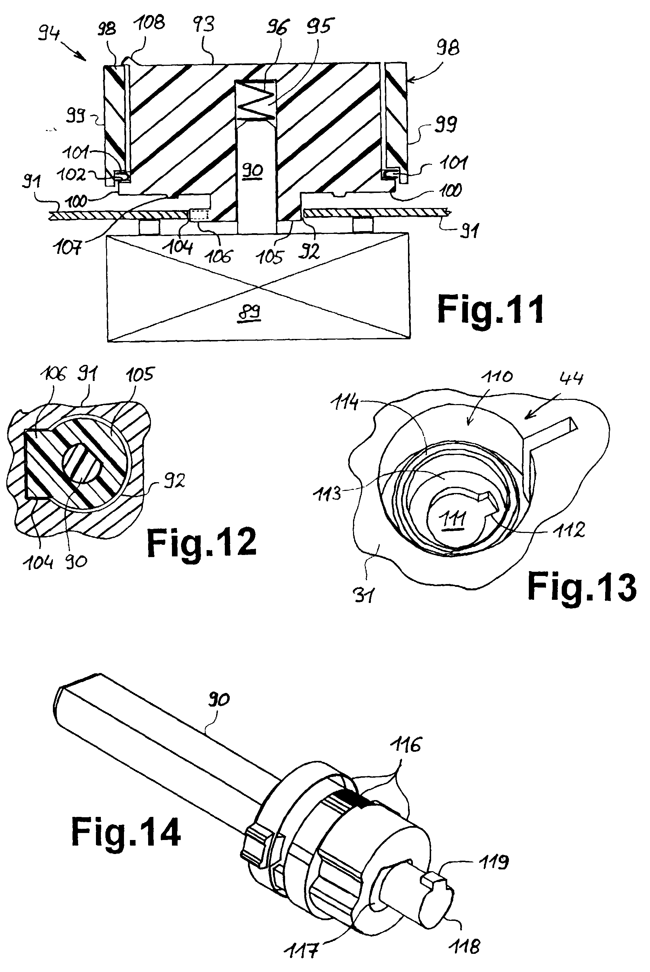

In der Fig. 11 ist im Schnitt ein elektrisches Schaltgerät 89 mit einer Steuerachse 90 dargestellt, das hinter einer Frontblende 91 eines elektrischen Gerätes, beispielsweise eines Küchengerätes, auf nicht dargestellte Weise befestigt ist. Die Steuerachse 90 reicht durch eine Durchgangsöffnung 92, deren Durchmesser allerdings weit größer ist. Auf die Steuerachse 90 aufgesetzt ist ein Knebelinnenteil 93 eines Schaltknebels 94. Die Aufnahmebohrung 95 ist korrespondierend zum Querschnitt der Steuerachse 90 ausgebildet mit der Besonderheit, daß die Steuerachse 90 darin axial beweglich ist. Mittels einer Spiralfeder 96 stützt sich der Knebelinnenteil im Bereich des Bodens der als Sackloch ausgeführten Aufnahmebohrung 95 gegen die Steuerachse 90 ab.

Drehbar gegenüber dem Knebelinnenteil 93 gelagert ist dieses umgebend ein Knebelaußenteil 98 aufgesetzt, das an seinem Außenumfang Betätigungsflächen 99 für einen Bediener des Schaltgeräts 89 aufweist. Eine innere Schulter 100 an dem Knebelinnenteil 93 überragt den Innendurchmesser des Knebelaußenteils 98 und ist einer entsprechend geformten Ausnehmung 101 in dem Knebelaußenteil gegenüber angeordnet. Zwischen den beiden ist ein ringförmiges Federelement 102 eingelegt, das beispielsweise, wie in Fig. 11 gezeigt, einen nach außen offenen U-förmigen Querschnitt aufweisen kann. Durch das Federelement 102 kann der Knebelaußenteil 98 federnd gegen den Knebelinnenteil 93 bzw. die Schulter 100 gedrückt werden. Im in Fig. 11 dargestellten, weitgehend entspannten Zustand des Federelements 102 findet zwischen Knebelinnen- und Knebelaußenteil bei einer Drehbewegung des Außenteils 98 keine oder nur äußerst geringe Reibung statt. Wird dagegen der Außenring 98 gegen den inneren Teil 93 axial gegen die Federwirkung des Federelements 102 gedrückt, findet ein Kraftschluß, vorzugsweise auch ein Formschluß, in Umfangsrichtung statt und der Innenteil kann mittels des Außenteils gedreht werden.

Die Durchgangsöffnung 92 ist, wie in Fig. 12 in der Draufsicht deutlich wird, im wesentlichen kreisförmig mit einer eckigen Ausnehmung 104 ausgebildet. An dem Innenteil 93 ist ein Ansatz 105 angeformt, der in die Öffnung 92 ragt. Der Ansatz 105 ist korrespondierend zu der Öffnung 92 mit einem der Ausnehmung 104 entsprechenden Vorsprung 106 ausgebildet. Im Normalzustand gemäß Fig. 11 liegen Vorsprung 106 und Ausnehmung 104 im wesentlichen auf einer Höhe, so daß der Ansatz 105 nicht mit der Steuerachse 90 gedreht werden kann, da der Vorsprung 106 an der Ausnehmung 104 anschlägt.

Zur Betätigung des Schaltgeräts 89 durch Verdrehen der Steuerachse 90 muß der Vorsprung 106 aus der Ausnehmung 104 gebracht werden. Dies erfolgt bevorzugt gemäß Fig. 11 durch axiales Verschieben des Innenteils 93 auf die Frontölende 91 zu. Ein Eindrücken des Innenteils 93 erfolgt jedoch über den Knebelaußenteil 98 bzw. dessen Betätigungsfläche 99. Dadurch wird der Knebelinnenteil soweit in Richtung der Frontblende 91 gedrückt, bis die Begrenzungsnocken 107 an der Blende anliegen. Dann greift der Vorsprung 106 nicht mehr in die Ausnehmung 104 ein und ist mitsamt dem Innenteil 93 gegenüber der Frontblende 91 verdrehbar. Schon ein geringes Verdrehen bewirkt, daß bei Wegfall der axialen Kraft auf den Knebelinnenteil Ausnehmung 104 und Ausnehmung 106 nicht mehr übereinanderliegen und demzufolge nicht mehr automatisch in Eingriff kommen können. Nur in einer, der in Fig. 11 und 12 gezeigten, Stellung kann die Blockiereinrichtung aktiviert werden.

Bevorzugt sind die Federkonstanten der Spiralfeder 96 und des Federelements 102 derart ausgelegt, daß sich die Spiralfeder 96 erheblich leichter zusammendrücken läßt. Dies hat den Vorteil, daß durch eine axiale Drückbewegung des Außenteils 98 auf die Frontblende 91 zu zuerst der Knebelinnenteil 93 auf der Steuerachse 90 gleitend gegen die Blende gedrückt wird, wodurch die Blockiereinrichtung zwischen Ansatz 105 und Blende gelöst wird. Erst durch weiteres Eindrücken mit gesteigerter Kraft, wobei sich der Innenteil mit den Begrenzungsnocken 107 gegen die Blende abstützt, kommen Knebelaußen- und innenteil in Eingriff und durch eine Drehbewegung des Außenteils 98 kann der Innenteil 93 und somit die Steuerachse 90 verdreht werden. Dies hat den Vorteil, daß die Blockiereinrichtung in einem Betätigungsstadium gelöst wird, in dem von dem Knebelaußenteil 98 auf den Innenteil 93 keine Drehmomente übertragen werden und somit keine Belastungen der Blockiereinrichtungen auftreten können.

Da der Knebelaußenteil 98 gegenüber dem Innenteil 93 und somit dem Schaitgerät 89 frei drehbar ist, ist eine Positionsanzeige des Innenteils notwendig. Diese kann z.B. als Nase 108 ausgeführt sein, bevorzugt farblich von dem Knebel 94 abgehoben. Als weitere Funktion kann sie durch Rastung beim Aufsetzen des Knebelaußenteils 98 auf den Innenteil 93 den Außenteil gegen Abfallen sichern, indem sie dessen Stirnfläche ein Stück überragt.

Die Fig. 12 zeigt im Schnitt innerhalb der Frontblende 91 eine beispielhafte Ausbildung der Durchgangsöffnung 92 mit einer eckigen Ausnehmung 104, die sich über einen Winkelbereich von etwa 90° erstreckt. Der Ansatz 105 des Knebelinnenteils 93 ist korrespondierend zu der Ausnehmung 104 mit einem Vorsprung 106 versehen. In dem Ansatz 105 verläuft die an einer Seite abgeflacht ausgeführte Steuerachse 90, wobei beide Teile ohne nennenswerte Reibung axial gegeneinander verschiebbar sind. Anstelle der Frontblende kann ein Schaltgerätdeckel entsprechend ausgebildet sein und einen Teil der Blockiereinrichtung bilden.

Eine alternative Möglichkeit einer Blockiereinrichtung zeigt Fig. 13. Dargestellt ist eine mögliche Ausbildung der Aufnahme 44 in dem Sockelboden 31, die zur Aufnahme der Steuerachse 90 des Schaltgeräts 89 dient. Die Aufnahme 44 besteht im wesentlichen aus einer kreisrunden sacklochförmigen Ausnehmung 110 mit einer Durchgangsbohrung 111. Diese weist an einer Stelle, ähnlich wie die Durchgangsöffnung 92 in Fig. 12, einen Ausschnitt 112 in dem Ausnehmungsboden 113 auf.

Auf dem Ausnehmungsboden 113 verläuft ein flanschartiger Vorsprung 114, der an seiner Stirnseite etwas angespitzt ist, mit einem gewissen Abstand zu den Wänden der Ausnehmung 110.

In die Aufnahme 44 gemäß der Fig. 13 kann eine Steuerachse 90 gemäß Fig. 14 eingesetzt werden. Der maximale Durchmesser der Achse 90 liegt etwas unterhalb des Durchmessers des Vorsprungs 114. Auf der abgeflachten Achse 90 sind mehrere Nockenwalzen 116 angebracht. Die Innenausnehmungen der Walzen 116 entsprechen den Querschnitt der Steuerachse 90 und weisen gegenüber dieser ein gewisses Spiel auf, so daß die Walzen 116 gegenüber der Achse axial verschiebbar sind. Anschließend an die Unterseite der untersten Nockenwalze 116 geht der Querschnitt der Steuerachse 90 über in einen runden Fortsatz 118 über, der konzentrisch zu der Achse ausgebildet ist. Er weist einen Rastvorsprung 119 auf, so daß der Querschnitt von Fortsatz und Vorsprung zu der Durchgangsbohrung 111 in Fig. 13 korrespondiert, ähnlich wie in Fig. 12. über den Fortsatz 118 wird eine Spiralfeder o.dgl. aufgesetzt, die gerade in den Vorsprung 114 einführbar ist. Sie stützt sich einerseits an dem Ausnehmungsboden 113 und andererseits an der Querschnittserweiterung 117 ab, die als Schulter zwischen Fortsatz und abgeflachtem Profil der Steuerachse 90 ausgebildet ist. Im eingesetzten Zustand läuft die Unterseite der untersten Nockenwalze 116 auf der Stirnseite des Vorsprungs 114. Durch die an der Querschnittserweiterung 117 anliegende Spiralfeder wird die Steuerachse 90 in einer Stellung gehalten, in der der Rastvorsprung 119 in dem Ausschnitt 112 der Durchgangsbohrung 111 sitzt und als Blockiereinrichtung ein Verdrehen der Achse durch Formschluß verhindert. Wird die Achse 90 durch axiale Krafteinwirkung gegen die Kraft der Feder eingedrückt, liegt der Vorsprung 119 hinter dem Ausnehmungsboden 113 und befindet sich nicht mehr im Eingriff mit dem Ausschnitt 112. Die Steuerachse 90 ist dann frei über einen Drehwinkel von fast 360° verdrehbar, und nur in einer einzigen Position, nämlich der Ausgangsposition ähnlich Fig. 12, rastet die Blockiereinrichtung durch die Kraft der Feder wieder ein.

Bei der Ausbildung einer Blockiereinrichtung gemäß den Fig. 13 und 14 kann ein Schaltknebel 94 fest auf der Steuerachse 90 sitzen. Hier ist die Blockiereinrichtung in den Schaltgerätsockel 41 verlegt, somit muß die aufzubringende Kraft von dem Sockel bzw. der Verbindung des Schaltgeräts 89 mit einer Halterung bzw. Frontblende 91 übernommen werden.

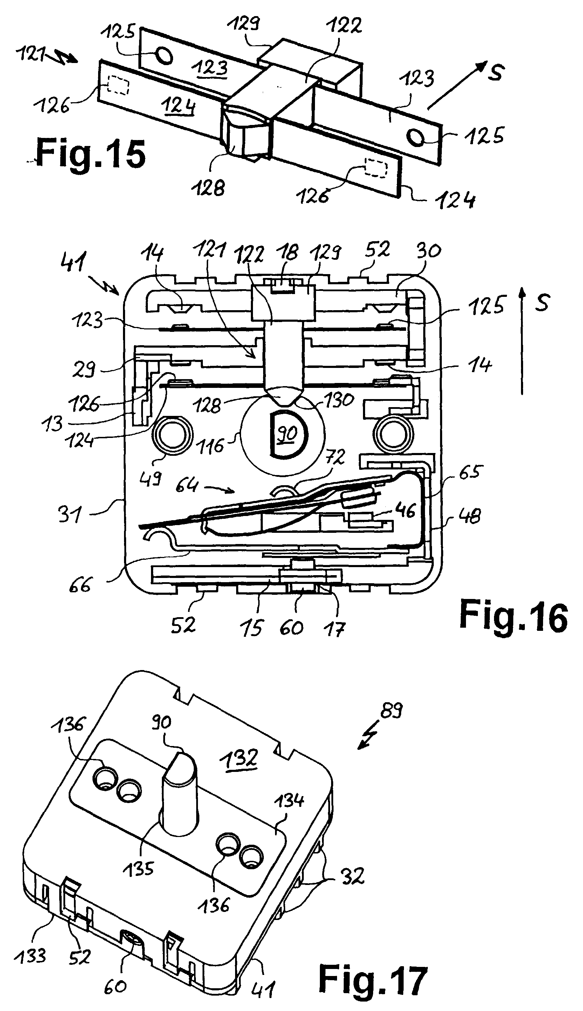

Die Fig. 15 zeigt ein Schalterteil 121, das zum Einsatz als Schiebeschalter ausgebildet ist. Ein Formkörper 122 weist einen durchgängigen dünnen Schaltarm 123 und einen durchgängigen dicken Schaltarm 124 auf, deren mittlerer Bereich jeweils vollständig von dem Formkörper umschlossen ist. Bis auf die unterschiedliche Materialstärke sind die Schaltarme 123 und 124 im wesentlichen gleich sowie in Längsrichtung des Formkörpers 122 bzw. die Schieberichtung sich überdeckend angeordnet. Im Bereich der Enden des dünnen Schaltarms 123 sind durch Prägung Prägekontaktköpfe 125 angebracht. In etwa im selben Bereich trägt der dicke Schaltarm 124 mit der gleichen Ausrichtung gestrichelt dargestellte Kontaktköpfe 126, die zum Schalten höherer elektrischer Leistungen aus speziellem Kontaktmaterial hergestellt und durch Schweißen angebracht sind.

An die vordere Stirnseite des Formkörpers 122 ist eine dreiecksförmige abgerundete Rastnase 128 angeformt. An der hinteren Stirnseite des Formkörpers ist gemäß einem Aspekt der Erfindung ein quaderförmiger Schaumstoffblock 129 angebracht, beispielsweise durch Verkleben. Er dient als Druckfeder zur elastischen Federung des Schalterteils 121 gegen einen Anschlag. Die Vorteile eines solchen voluminösen Federkörper aus Kunststoff liegen zum einen in der Isolierwirkung. Zum anderen wird keine aufwendige Führung o.dgl. für die Federung benötigt, v.a. wenn die laterale Ausdehnung größer ist als die in Belastungsrichtung.

Die Fig. 16 zeigt eine Draufsicht auf einen Schaltgerätsockel 41 gemäß den Fig. 6 und 7. In die Längsführung 42 ist der Schalterteil 121 eingesetzt. Der Schaumstoffblock 129 ist an der Befestigungslasche 18 durch Umbiegen eines Endabschnitts derselben befestigt. Der Vorteil einer zusätzlichen Verklebung des Schaumstoffblocks 121 mit dem Schalterteil 129 liegt unter anderem darin, daß auf diese Weise der Schalterteil über den Schaumstoffblock fixiert gelagert ist. Ein seitliches Verrutschen kann sowohl durch die Befestigung mittels des Schaumstoffblocks 129 als auch durch eine nicht dargestellte, in die Längsführung 42 eingreifende Führungsnase vermieden werden.

Die Rastnase 128 des Formkörpers 121 liegt an einer Nockenwalze 116 auf der Steuerachse 90 an, und zwar in einer Schaltausnehmung 130. Die radiale Tiefe der Schaltausnehmung 130 entspricht dem dargestellten Abstand der Kontaktköpfe 125 und 126 des Schalterteils 121 von den Kontaktköpfen 14 des Schaltgerätsockels 41 bzw. liegt etwas darüber. Die Schaltausnehmung 130 kann eine bestimmte Stellung der Steuerachse 90, beispielsweise die sogenannte Nullstellung, definieren. Durch Drehen der Steuerachse 90 wird, sobald die Rastnase 128 aus der Schaltausnehmung 130 bewegt wird und an dem Außenradius anliegt, der Schalterteil 121 in Schieberichtung S gegen den elastischen Widerstand der Schaumstoffederung gedrückt. Dadurch werden die Kontaktköpfe 125 bzw. 126 an die Kontaktköpfe 14 angelegt und verbinden diese jeweils durch die Schalterarme 123 und 124. Somit können Schaltvorgänge durch Verlassen bzw. Erreichen der in Fig. 16 dargestellten Stellung der Nockenwalze 116 ausgelöst werden. Dies kann beispielsweise ein elektrisches Signal zur Betätigung einer Funktionsanzeige sein, ebenso möglich ist die Aktivierung eines Topferkennungssystems o.dgl.

Ebenso ist in Fig. 16 ein eingebauter Schnappschalter 64 gemäß Fig. 9 dargestellt, auf den an dieser Stelle nicht nochmals eingegangen wird. Der Schleifer 72 liegt an einer der Übersichtlichkeit halber weggelassenen Nockenwalze 116 über der dargestellten für den Schalterteil 121 an. Der Schnappschalter 64 kann durch Kontaktschweißen oder Vernieten des Trageblechs 65 mit der Halteplatte 48 an dem Schaltgerätsockel befestigt werden. Nach dem Einbau des Schnappschalters wird die Justierschraube 60 in den Aufnahmesteg 15 eingedreht.

Fig. 17 zeigt ein elektrisches Schaltgerät 89 gemäß der Erfindung mit auf den Schaltgerätsockel 41 aufgesetztem Gehäusedeckel 132. Mittels U-förmiger Laschen 133 ist er an den Rastvorsprüngen 52 des Sockels 41 ohne Zuhilfenahme von Werkzeugen durch Aufrasten befestigt.

Der Deckel 132 weist einen mittig verlaufenden Befestigungsstreifen 134 auf, der vorzugsweise aus dünnem Metall oder Blech besteht. Symmetrisch zu dem Durchgang 135 für die Steuerachse 90 weist er jeweils zwei vorgefertigte Befestigungsbohrungen 136 auf, in die Blechschrauben o.dgl. eingeschraubt werden können. Alternativ können die Bohrungen 136 mit vorgefertigtem bzw. vorgeschnittenen Gewinde versehen sein. Der Abstand des inneren Paares von Bohrungen 136 kann beispielsweise einer US-Norm entsprechen, der Abstand des äußeren Paares von Bohrungen beispielsweise einer EG-Norm. Die Durchmesser der Bohrungen 136 können etwa 4 mm betragen. In der dargestellten Ausführung liegen die äußeren Bohrungen 136 in etwa über den Schraubaufnahmen 49 des Schaltgerätsockeis 41 in Fig. 6. Auf diese Weise ist eine Verschraubung nicht nur des Deckels 132, sondern zusätzlich des die eigentlichen Schalteinrichtungen tragenden Sockels 41 mit einer Halterung, wie beispielsweise einer Frontblende 91, möglich.

An der unteren in der Fig. 17 sichtbaren Seite des Schaltgeräts 89 ist die Justierschraube 60 sichtbar, die auch bei aufgesetztem Deckel 132 erreichbar ist. Dies ermöglicht es, das Schaltgerät im zusammengesetzten Zustand zu justieren, was besonders für die Temperaturverhältnisse im Inneren sehr wichtig ist. Des weiteren sind die Trennstege 32 zu erkennen.

## Patentansprüche

1. Verfahren zur Herstellung eines elektrischen Schaltgeräts, insbesondere eines taktenden Leistungssteuergerätes, mit einen Schalter mit Schaltkontakt und Gegenkontakt und einem Schaltgerätsockel, der Anschlüsse enthält, dadurch gekennzeichnet, daß Anschlüsse (12, 22, 45) und Verbindungen (13) aus einem Flachmaterial (11) herausgearbeitet und in einem darauffolgenden Abschnitt als zusammenhängende Platine (16) mit Verbindungen zwischen den Anschlüssen in eine Vorrichtung (36) eingebracht werden, in der einzelne Abschnitte durch Umbiegen aus der Ebene der Platine gebracht werden, und die Platine danach noch zusammenhängend in eine Form (25) zur Herstellung des Schaltgerätsockels aus plastisch verformbarem Material eingebracht wird, wobei einige Teile der Platine Formbegrenzungen bilden und andere Teile derart verlaufen, daß sie von dem Material vollständig umschlossen werden, und wobei anschließend wenigstens eine Verbindung getrennt wird.

2. Verfahren nach Anspruch 1, dadurch gekennzeichnet, daß die Verbindungen (13) durch Ausstanzen getrennt werden, wobei vorzugsweise beim Ausstanzen zumindest teilweise durch das Material des Schaltgerätsockels (41) hindurchgestanzt wird.

3. Verfahren nach Anspruch 1 oder 2, dadurch gekennzeichnet, daß wenigstens eine Verbindung (13) oder Kontaktbahn der Platine (16) undurchtrennt bleibt und, insbesondere zumindest abschnittsweise von dem Material umgeben, von einem Anschluß (12) zu dem Schalter (64) führt.

4. Verfahren nach einem der vorhergehenden Ansprüche, dadurch gekennzeichnet, daß der Schaltgerätsockel (41) im Spritzgießverfahren hergestellt wird, wobei vorzugsweise ein elektrisch isolierender Kunststoff verwendet wird.

5. Verfahren nach einem der vorhergehenden Ansprüche, dadurch gekennzeichnet, daß das Flachmaterial (11) als Endlosband zugeführt wird, wobei vorzugsweise die Platinen (16) für jeden Schaltgerätsockel (41) nach dem Herausarbeiten der Anschlüsse (12) und Verbindungen (13) von dem Endlosmaterial abgetrennt werden.

6. Verfahren nach einem der vorhergehenden Ansprüche, dadurch gekennzeichnet, daß nach dem Herstellungsvorgang zusätzliche Anschlüsse (22) in den Schaltgerätsockel (41) eingebracht werden, vorzugsweise in dafür vorgesehene Ausnehmungen, wobei sie insbesondere durch Verstemmen festgelegt werden.

7. Elektrisches Schaltgerät, insbesondere hergestellt nach einem Verfahren nach einem der vorhergehenden Ansprüche, das einen Schaltgerätsockel (41) aufweist, der Anschlüsse (12, 22, 45) nach außen enthält und wenigstens einen Schalter (64) trägt, welcher wenigstens einen Schaltkontakt (76) und wenigstens einen Gegenkontakt (46) aufweist, wobei die Kontakte mit Anschlüssen verbunden sind und mindestens eine Verbindung (13) von einem Anschluß zu dem Schalter zumindest abschnittsweise vollständig von dem Schaltgerätsockel umgeben ist.

8. Elektrisches Schaltgerät nach Anspruch 7, dadurch gekennzeichnet, daß die Anschlüsse (12, 22, 45) über eine Rückseite des Schaltgerätsockels (41) vorstehen und vorzugsweise Steckkontakte, insbesondere Steckanschlußfahnen sind.

9. Elektrisches Schaltgerät nach einem der Ansprüche 7 oder 8, dadurch gekennzeichnet, daß die Anschlüsse (12, 22, 45) zumindest teilweise über eine Innenseite des Schaltgerätsockels (41) vorstehen, wobei sie vorzugsweise mit einer Seite zumindest teilweise an Vorsprüngen (30) an der Innenseite anliegen.

10. Elektrisches Schaltgerät nach einem der Ansprüche 7 bis 9, dadurch gekennzeichnet, daß auf der Rückseite, und insbesondere auf der Innenseite, zwischen wenigstens zwei Anschlüssen Stege (32, 51) verlaufen, die vorzugsweise an dem Schaltgerätsockel (41) angeformt sind und insbesondere jeweils in etwa die Höhe der Anschlüsse (12, 22, 45) haben, vorzugsweise die Anschlüsse überragen.

11. Elektrisches Schaltgerät nach einem der Ansprüche 7 bis 10, dadurch gekennzeichnet, daß wenigstens drei Anschlüsse (12) auf der Rückseite in einer Reihe angeordnet sind, wobei vorzugsweise mehrere Reihen vorgesehen sind, die insbesondere parallel zueinander verlaufen.

12. Elektrisches Schaltgerät nach einem der Ansprüche 7 bis 11, gekennzeichnet durch wenigstens eine Gruppe von Anschlüssen (12), die aus mindestens zwei miteinander verbundenen Anschlüssen besteht, wobei insbesondere die Verbindung der Anschlüsse miteinander zumindest teilweise innerhalb des Schaltgerätsockels (41) verläuft.

13. Elektrisches Schaltgerät nach einem der Ansprüche 7 bis 12, dadurch gekennzeichnet, daß wenigstens ein Anschluß (12, 22, 45) als Kontakt über die Innenseite des Schaltgerätsockels (41) ragt, vorzugsweise einen Kontaktkopf (14, 46) trägt, wobei er insbesondere an einem abstehenden Vorsprung (30) des Schaltgerätsockels anliegt.

14. Elektrisches Schaltgerät nach einem der Ansprüche 7 bis 13, dadurch gekennzeichnet, daß der Schalter ein Schnappschalter (64) ist, der durch ein thermomechanisches Schaltorgan, das vorzugsweise ein Thermobimetall (66) mit Heizung (54) ist, auslösbar ist, wobei zur Beeinflussung des Schnappschalters eine Verstelleinrichtung, vorzugsweise mit einer Steuerachse (90) mit Handhabe (94), vorgesehen ist, wobei insbesondere weitere Schalteinrichtungen durch die Verstelleinrichtung direkt auslösbar sind.

15. Elektrisches Schaltgerät nach einem der Ansprüche 7 bis 14, dadurch gekennzeichnet, daß die Innenseite eine Aufnahme für eine zweite Schalteinrichtung aufweist, die insbesondere als Längsführung (42) mit wenigstens einer Längsnut ausgebildet ist, und daß an dem von dem Mittelbereich des Schaltgerätsockels (41) abgelegenen Ende eine Begrenzung (18) der Längsführung vorgesehen ist, die über die Innenseite vorsteht, wobei vorzugsweise die zweite Schalteinrichtung ein durch die Verstelleinrichtung gegen eine Federeinrichtung (129) betätigbarer Schiebeschalter ist, der an einem in der Längsführung verschiebbaren Formkörper (122) wenigstens einen Schaltarm (123, 124) mit einem Kontaktkopf trägt, wobei wenigstens ein Gegenkontakt von über den Schaltgerätsockel vorstehenden Anschlüssen (12) gebildet ist, wobei der Formkörper vorzugsweise zwei parallele Schaltarme trägt, die in Verschieberichtung (5) hintereinander angeordnet sind.
